(19) **Europäisches Patentamt / European Patent Office / Office européen des brevets**

(11) **EP 3 734 836 B1**

(12) **FASCICULE DE BREVET EUROPEEN**

(45) Date de publication et mention de la délivrance du brevet:
**28.02.2024 Bulletin 2024/09**

(21) Numéro de dépôt: **20179241.3**

(22) Date de dépôt: **27.12.2016**

(51) Classification Internationale des Brevets (IPC):
***H02S 20/32*** *(2014.01)*

(52) Classification Coopérative des Brevets (CPC):
**H02S 20/32;** F24S 30/425; F24S 50/20;
F24S 2050/25; F24S 2201/00; Y02E 10/47;
Y02E 10/50

(54) **PROCÉDÉ DE PILOTAGE DE L'ORIENTATION D'UN MODULE SOLAIRE AVEC DEUX FACES PHOTO-ACTIVES**

STEUERUNGSVERFAHREN ZUR AUSRICHTUNG EINES SOLARMODULS, DAS MIT ZWEI LICHTAKTIVEN SEITEN AUSGESTATTET IST

METHOD FOR CONTROLLING THE ORIENTATION OF A SOLAR MODULE WITH TWO PHOTO-ACTIVE SURFACES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2016 FR 1650013**

(43) Date de publication de la demande:
**04.11.2020 Bulletin 2020/45**

(62) Numéro(s) de document de la (des) demande(s) initiale(s) en application de l'article 76 CBE:
**16829291.0 / 3 400 647**

(73) Titulaire: **Nextracker LLC**
**Fremont, CA 94555 (US)**

(72) Inventeurs:
- **ARLIAUD, Jérôme**
  **83910 Pourrières (FR)**
- **MICHOTTE DE WELLE, Madyan**
  **13590 Meyreuil (FR)**

(74) Mandataire: **v. Bezold & Partner Patentanwälte - PartG mbB**
**Ridlerstraße 57**
**80339 München (DE)**

(56) Documents cités:
US-A- 4 013 885      US-A1- 2008 295 883
US-A1- 2010 000 517   US-A1- 2011 083 718
US-A1- 2013 042 901

## Description

La présente invention se rapporte à un procédé de pilotage de l'orientation d'un module solaire comprenant :

- un suiveur solaire mono-axe orientable autour d'un axe de rotation pour une orientation du module solaire permettant de suivre le soleil lors de son élévation et de sa descente d'est en ouest ; et
- un dispositif photovoltaïque supporté par le suiveur solaire et présentant une face supérieure photo-active faisant face au ciel et munie de cellules photovoltaïques et une face inférieure photo-active faisant face au sol et munie de cellules photovoltaïques.

Ainsi, l'invention se situe dans le domaine technique des modules solaires orientables autour d'un axe de rotation et dont le dispositif photovoltaïque présente une technologie bifaces, c'est-à-dire avec une face supérieure productive faisant face au soleil et une face inférieure également productive faisant face au sol. La face supérieure bénéficie du rayonnement solaire dit incident, qui correspond au rayonnement solaire, direct et/ou diffus, qui provient du ciel, tandis que la face inférieure bénéficie du rayonnement solaire réfléchi par le sol, généralement appelé albédo.

Il est classique d'asservir l'orientation du suiveur solaire sur une orientation dite directe en se basant sur un calcul astronomique de la position du soleil, pour un positionnement en temps réel en face du soleil.

Cependant, un asservissement sur une telle orientation directe présente un inconvénient majeur en offrant un déficit de rendement dans certaines conditions météorologiques, et en particulier dans des conditions nuageuses qui sont causes d'un rayonnement solaire diffus. Le rayonnement solaire diffus se manifeste lorsque le rayonnement solaire direct se disperse dans les nuages et les particules atmosphériques. Le rayonnement solaire diffus résulte de la diffraction de la lumière par les nuages et les molécules diverses en suspension dans l'atmosphère. Le rayonnement solaire diffus ne suit donc pas nécessairement la direction définie par le soleil en direction du point d'observation à la surface de la Terre. Le document US 2011083718 A1 divulgue un procédé de pilotage de l'orientation d'un module solaire supporté par un suiveur solaire comprenant la mesure du rayonnement incident, la détermination d'une orientation optimale, la mémorisation en mémoire des mesures passée de rayonnement incident et des prévisions des évolutions futures du rayonnement.

En outre, avec un dispositif photovoltaïque de technologie bifaces, une orientation du suiveur solaire sur une orientation directe ne se traduira pas nécessairement par un maximum de rendement énergétique sur la face inférieure du dispositif photovoltaïque, suivant l'albédo.

La présente invention a pour but de résoudre ces inconvénients en proposant un procédé de pilotage qui permet d'asservir le module solaire sur une orientation optimale qui prendra en compte à la fois le rayonnement direct, le rayonnement diffus et le rayonnement albédo.

A cet effet, elle propose un procédé de pilotage de l'orientation d'un module solaire selon la revendication 1 comprenant :

- un suiveur solaire mono-axe orientable autour d'un axe de rotation pour une orientation du module solaire permettant de suivre le soleil lors de son élévation et de sa descente d'est en ouest ; et
- un dispositif photovoltaïque supporté par ledit suiveur solaire et présentant une face supérieure photo-active faisant face au ciel et munie de cellules photovoltaïques et une face inférieure photo-active faisant face au sol et munie de cellules photovoltaïques ;

ce procédé comprenant les étapes successives suivantes :

- mesure d'une répartition de la luminance solaire dite incidente issue du rayonnement solaire dit incident qui provient du ciel et qui est propre à atteindre la face supérieure du dispositif photovoltaïque, ladite répartition de la luminance solaire incidente étant établie selon plusieurs angles d'élévation correspondants à plusieurs orientations du module solaire autour de l'axe de rotation ;
- mesure d'une répartition de la luminance solaire dite réflective issue du rayonnement solaire dit albédo qui correspond à la réflexion du rayonnement solaire sur le sol et qui est propre à atteindre la face inférieure du dispositif photovoltaïque, ladite répartition de la luminance solaire réflective étant établie selon plusieurs angles d'élévation correspondants à plusieurs orientations du module solaire autour de l'axe de rotation ;
- détermination d'une orientation optimale du module solaire compte tenu des mesures de la répartition de la luminance solaire incidente et de la répartition de la luminance solaire réflective ;
- asservissement de l'orientation du module solaire sur ladite orientation optimale.

Ainsi, le procédé met en oeuvre un asservissement sur une orientation optimale qui ne tient pas seulement compte du rayonnement solaire direct, mais qui tient également compte du rayonnement solaire diffus et du rayonnement albédo, de sorte que seront pris en considération la production énergétique de la face supérieure du dispositif photovoltaïque née à la fois du rayonnement direct et du rayonnement diffus, ainsi que la production énergétique de la face inférieure du dispositif photovoltaïque née du rayonnement albédo.

Le procédé de pilotage comprend les étapes suivantes :

- mémorisation des mesures passées de la répartition de la luminance solaire incidente et de la répartition de la luminance solaire réflective ;
- mémorisation des orientations optimales passées déterminées pour les mesures passées de la répartition de la luminance solaire incidente et de la répartition de la luminance solaire réflective ;
- prévision des évolutions futures de la répartition de la luminance solaire incidente et de la répartition de la luminance solaire réflective, sur la base des mesures passées de la répartition de la luminance solaire incidente et de la répartition de la luminance solaire réflective ;
- calcul de l'évolution future de l'orientation optimale en fonction de la prévision des évolutions futures de la répartition de la luminance solaire incidente et de la répartition de la luminance solaire réflective ;
- asservissement de l'orientation du module solaire sur l'orientation optimale en fonction des orientations optimales passées et en fonction de l'évolution future de l'orientation optimale.

Ainsi, est mis en oeuvre une prévision, à plus ou moins court terme, de l'évolution future de l'orientation optimale et, ensuite, en fonction de cette évolution future de l'orientation optimale, un asservissement de l'orientation du module solaire peut être mis en oeuvre de manière anticipative, sans suivre de manière directe et en temps réel l'orientation optimale calculée, permettant ainsi d'éviter des changements d'orientation qui ne procureraient que peu de gain énergétique, voire procureraient des pertes énergétiques, comme cela serait par exemple le cas si un unique nuage passe devant le soleil pour un temps réduit.

Selon une outre caractéristique, la prévision des évolutions futures de la répartition de la luminance solaire incidente et de la répartition de la luminance solaire réflective est basée sur un calcul de prévision météorologique dans une zone de localisation du module solaire.

Selon une possibilité de l'invention, la détermination de l'orientation optimale du module solaire est basée au moins en partie sur une recherche, dans la répartition de la luminance solaire incidente et dans la répartition de la luminance solaire réflective, d'un angle d'élévation associé à un maximum d'éclairement solaire sur les deux faces du dispositif photovoltaïque.

Selon une autre possibilité de l'invention, la détermination de l'orientation optimale du module solaire est basée au moins en partie sur une recherche, dans la répartition de la luminance solaire incidente et dans la répartition de la luminance solaire réflective, d'un angle d'élévation associé à un maximum de production énergétique du module solaire.

Dans une réalisation particulière, la détermination de l'orientation optimale du suiveur solaire est basée également sur la prise en compte de l'un au moins des paramètres suivants :

- une consommation d'énergie électrique nécessaire pour modifier l'orientation du module solaire ;
- un taux d'usure d'organes mécaniques du suiveur solaire sollicités lors d'un changement d'orientation du module solaire ;
- une vitesse angulaire du suiveur solaire lors d'un changement d'orientation du module solaire ;
- un débattement angulaire du module solaire entre une orientation minimale et une orientation maximale.

Ainsi, lors de l'asservissement sur une orientation optimale, sont pris en considération les contraintes mécaniques et cinématiques du suiveur solaire, afin de l'asservissement ne devienne pas plus nuisible que bénéfique.

Avantageusement, lors de la mesure de la répartition de la luminance solaire incidente, est mise en oeuvre une pondération fréquentielle fonction d'une réponse en fréquence des cellules photovoltaïques de la face supérieure du dispositif photovoltaïque ; et lors de la mesure de la répartition de la luminance solaire réflective, est mise en oeuvre une pondération fréquentielle fonction d'une réponse en fréquence des cellules photovoltaïques de la face inférieure du dispositif photovoltaïque.

Ainsi, ces pondérations fréquentielles vont consister à appliquer des filtres fréquentielles propres à chaque face qui tiendront compte de la réponse spectrale de chaque face, dans la mesure où la réponse spectrale de chaque face dépend de la longueur du rayonnement lumineux reçu en fonction de sa technologie ; la réponse spectrale pouvant varier entre les deux faces si ces deux faces ne sont pas de la même technologie.

Dans un mode de réalisation particulier, lors de l'étape de détermination d'une orientation optimale, sont mises en oeuvre les étapes suivantes :

- conversion de la mesure de la répartition de la luminance solaire incidente en une cartographie de luminance incidente définissant une répartition de valeurs de la luminance selon des bandes dites supérieures, établies selon une première direction horizontale parallèle à l'axe de rotation, et selon des colonnes dites supérieures, établies selon une seconde direction horizontale orthogonale à la première direction, où chaque bande supérieure est associée à un angle d'élévation et chaque colonne supérieure est associée à un angle d'azimut ;

- conversion de la mesure de la répartition de la luminance solaire réflective en une cartographie de luminance réflective définissant une répartition de valeurs de luminance selon des bandes dites inférieures, établies selon la première direction, et selon des colonnes dites inférieures, établies selon la seconde direction, où chaque bande inférieure est associée à un angle d'élévation et chaque colonne inférieure est associée à un angle d'azimut ;

- calcul, pour chaque bande supérieure et inférieure, d'une valeur de luminance équivalente à partir de l'ensemble des valeurs de luminance prises dans la bande considérée ;

- calcul, pour plusieurs angles d'élévation théoriques correspondant à plusieurs orientations du module solaire, de valeurs de luminance perçue par les deux faces du dispositif photovoltaïque à partir des valeurs de luminance équivalentes calculées pour toutes les bandes et à partir des écarts angulaires entre les angles d'élévation théoriques et les angles d'élévation associées aux bandes ;

- détermination d'un angle d'élévation théorique associé à un maximum de la valeur de luminance perçue et sélection dudit angle d'élévation théorique comme orientation optimale.

De cette manière, le calcul de l'orientation optimale est basé sur le calcul de valeurs de luminance perçues associées à différents angles d'élévation qui sont à rapprocher de l'orientation du module solaire. Plus l'écart angulaire entre les bandes est faible et plus le nombre de bandes est élevé, plus le calcul de l'orientation optimale sera fin et précis.

Dans une première réalisation, les mesures de la répartition de la luminance solaire incidente et de la répartition de la luminance solaire réflective sont réalisées au moyen d'un dispositif de prise d'images qui assure, d'une part, une prise d'images du ciel pour la mesure de la répartition de la luminance solaire incidente et, d'autre part, une prise d'images du sol pour établir la mesure de la répartition de la luminance solaire réflective.

Avec une prise d'image, les répartitions des luminances solaires incidente et réflective sont mesurées à partir d'images qui pourront ensuite être converties en cartographies de luminance.

Dans une seconde réalisation, les mesures de la répartition de la luminance solaire incidente et de la répartition de la luminance solaire réflective sont réalisées au moyen d'un système de mesure comprenant plusieurs capteurs photosensibles, notamment du type capteur pyranométrique, avec, d'une part, un dispositif de mesure supérieur présentant des capteurs photosensibles supérieurs répartis face au ciel pour la mesure de la répartition de la luminance solaire incidente et, d'autre part, un dispositif de mesure inférieur présentant des capteurs photosensibles inférieurs répartis face au sol pour la mesure de la répartition de la luminance solaire réflective.

Avec une mesure de la luminance solaire par des capteurs photosensibles, les répartitions des luminances solaires incidente et réflective sont mesurées à partir de matrices des mesures faites individuellement par chaque capteur photosensible, ces capteurs photosensibles étant positionnées à différents angles d'élévation (sur le dessus et sur le dessous), et notamment réparties sur un support en forme de sphère, afin d'offrir une large observation du ciel et du sol.

Selon une possibilité de l'invention, l'étape d'asservissement de l'orientation du module solaire est réalisée en fonction de la consommation d'énergie nécessaire pour modifier l'orientation du module solaire.

Autrement dit, l'asservissement effectif tient compte de cette consommation d'énergie afin de mettre en oeuvre ou pas une orientation selon l'orientation optimale, dans le but d'anticiper un changement dans la couverture nuageuse.

Conformément à une autre caractéristique de l'invention, lors de l'étape d'asservissement de l'orientation du module solaire, est établi un scénario potentiel au cours duquel l'orientation du module solaire est modifié en partant d'une orientation présente jusqu'à atteindre l'orientation optimale, et à ce scénario potentiel sont associés les calculs de :

- une évolution de l'orientation du module solaire au cours du changement d'orientation en partant de l'orientation présente jusqu'à atteindre l'orientation optimale, cette évolution dépendant de la vitesse de déplacement en rotation du module solaire ;

- une évolution de la consommation d'énergie nécessaire pour modifier l'orientation du module solaire ;

- une évolution de la production d'énergie solaire supplémentaire attendue avec un tel changement d'orientation ;

- une évolution du rendement énergétique attendue basée sur la différence entre la production d'énergie solaire et la consommation d'énergie ;

et ensuite l'orientation du module solaire est asservie sur ladite orientation optimale si le rendement énergétique est globalement positif pour le scénario, sinon l'orientation du suiveur solaire est maintenue à l'orientation présente.

Ainsi, l'asservissement selon une orientation optimale ne se fera qu'au titre d'un bénéfice énergétique, afin de ne pas en mettre en oeuvre de changement d'orientation systématique à chaque changement dans la couverture nuageuse.

L'invention se rapporte également à un module solaire comprenant :

- un suiveur solaire mono-axe orientable autour d'un axe de rotation pour une orientation du module solaire permettant de suivre le soleil lors de son élévation et de sa descente d'est en ouest, ledit suiveur solaire étant actionnable en rotation selon ledit axe de rotation au moyen d'un système d'actionnement ;
- un dispositif photovoltaïque supporté par ledit suiveur solaire et présentant une face supérieure photo-active faisant face au ciel et munie de cellules photovoltaïques et une face inférieure photo-active faisant face au sol et munie de cellules photovoltaïques ;

ce module solaire étant remarquable en ce qu'il comprend en outre :

- un dispositif de mesure supérieur propre à mesurer une répartition de la luminance solaire incidente issue du rayonnement solaire incident qui provient du ciel et qui est propre à atteindre la face supérieure du dispositif photovoltaïque, ladite répartition de la luminance solaire incidente étant établie selon plusieurs angles d'élévation correspondants à plusieurs orientations du module solaire autour de l'axe de rotation ;
- un dispositif de mesure inférieur propre à mesurer une répartition de la luminance solaire réflective issue du rayonnement solaire albédo qui correspond à la réflexion du rayonnement solaire sur le sol et qui est propre à atteindre la face inférieure du dispositif photovoltaïque, ladite répartition de la luminance solaire réflective étant établie selon plusieurs angles d'élévation correspondants à plusieurs orientations du module solaire autour de l'axe de rotation ; et
- une unité de contrôle en liaison, d'une part, avec les dispositifs de mesure supérieur et inférieur et, d'autre part, avec le système d'actionnement pour piloter la rotation du suiveur solaire, où ladite unité de contrôle est conformé pour mettre en oeuvre les étapes du procédé de pilotage conforme à l'invention.

D'autres caractéristiques et avantages de la présente invention apparaîtront à la lecture de la description détaillée ci-après, d'exemples de mise en oeuvre non limitatif, faite en référence aux figures annexées dans lesquelles :

- la figure 1 comprend quatre schémas illustrant chacun un module solaire dans des conditions météorologiques nuageuses (schémas (a) et (b)) et dégagées (schémas (c) et (d)) ;
- la figure 2 est une vue schématique d'un module solaire avec suiveur solaire mono-axe conforme à l'invention, avec une illustration d'un système de mesure propre à mesurer une répartition de la luminance solaire incidente et une répartition de la luminance solaire réflective ;
- les figures 3a sont des vues schématiques en perspective (figure 3a) et en coupe verticale (figure 3b) d'un premier exemple de système de mesure ;
- la figure 4 est une vue schématique en perspective d'un second exemple de système de mesure ;
- la figure 5 est une représentation schématique d'une cartographie de luminance incidente (en haut à gauche) et d'une matrice de valeurs de luminance équivalente (en haut à droite) issue de cette cartographie de luminance incidente, et d'une cartographie de luminance réflective (en bas à gauche) et d'une matrice de valeurs de luminance équivalente (en bas à droite) issue de cette cartographie de luminance réflective ;
- la figure 6 comprend deux schémas, avec :

    - à gauche, une vue schématique de côté de quatre colonnes supérieures et de quatre colonnes inférieures de cartographies de luminance solaire respectivement incidente et réflective, avec les angles d'azimut associés aux différentes colonnes, afin d'illustrer le calcul mis en oeuvre pour le calcul d'une valeur de luminance équivalente servant à déterminer l'orientation optimale ;
    - à droite, une vue schématique de côté de quatre bandes supérieures et de quatre bandes inférieures de cartographies de luminance solaire respectivement incidente et réflective, avec les angles d'élévation associés aux différentes bandes, afin d'illustrer le calcul mis en oeuvre pour le calcul d'une valeur de luminance perçue servant à déterminer l'orientation optimale ;

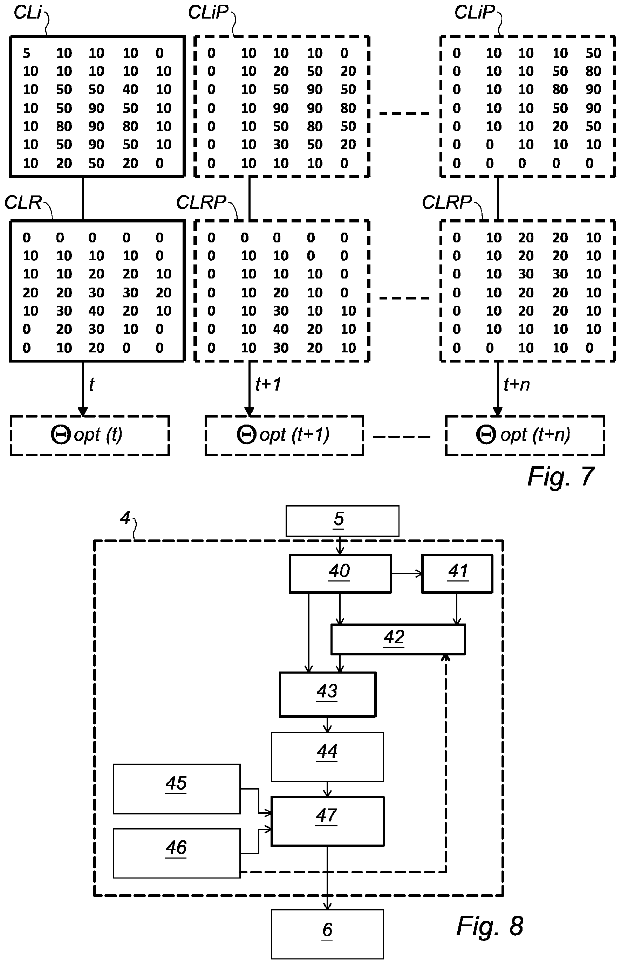

- la figure 7 représente trois couples de cartographies de luminance solaire incidente et réflective, auxquels sont associés en-dessous les orientations optimales correspondantes, dont un couple de cartographies à un instant présent (t) et deux couples de cartographies prévisionnelles à des instants futurs (t+1) et (t+n) ;
- la figure 8 est une représentation sous forme d'un schéma fonctionnel des éléments fonctionnels employés pour la mise en oeuvre d'un procédé de pilotage conforme à l'invention ;

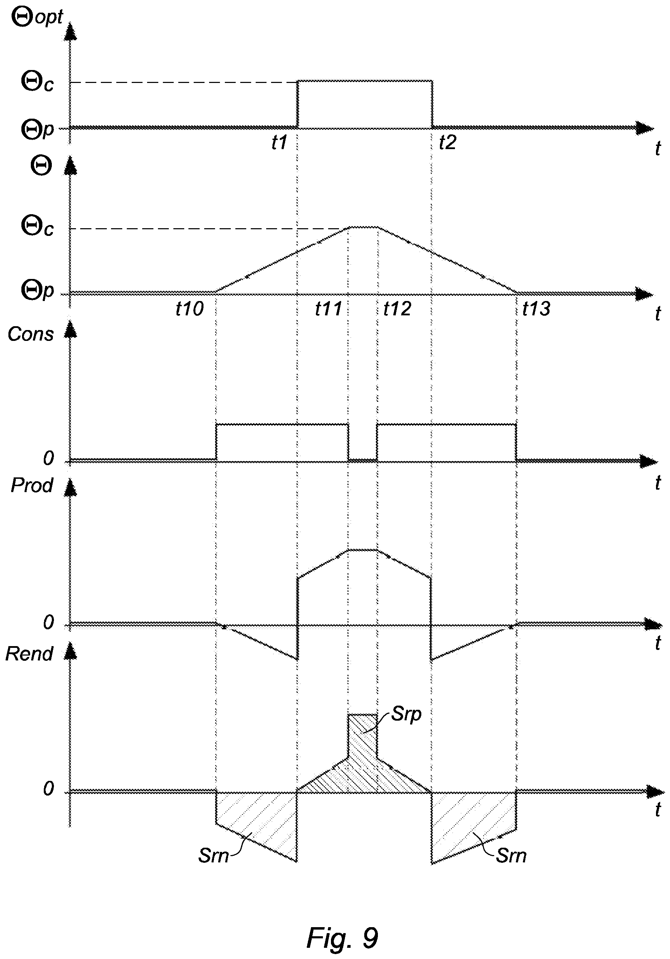

- la figure 9 représente cinq courbes prévisionnelles calculées pour un premier scénario potentiel défini lors de l'étape d'asservissement, avec de haut en bas, une courbe d'évolution de l'orientation optimale future (ou prévisionnelle) calculé lors de l'étape de prévision, une courbe d'évolution de l'orientation du module solaire, une courbe d'évolution de la consommation d'énergie nécessaire pour modifier l'orientation du module solaire, une courbe d'évolution de la production d'énergie solaire supplémentaire attendue, et une courbe d'évolution du rendement énergétique attendu ; et

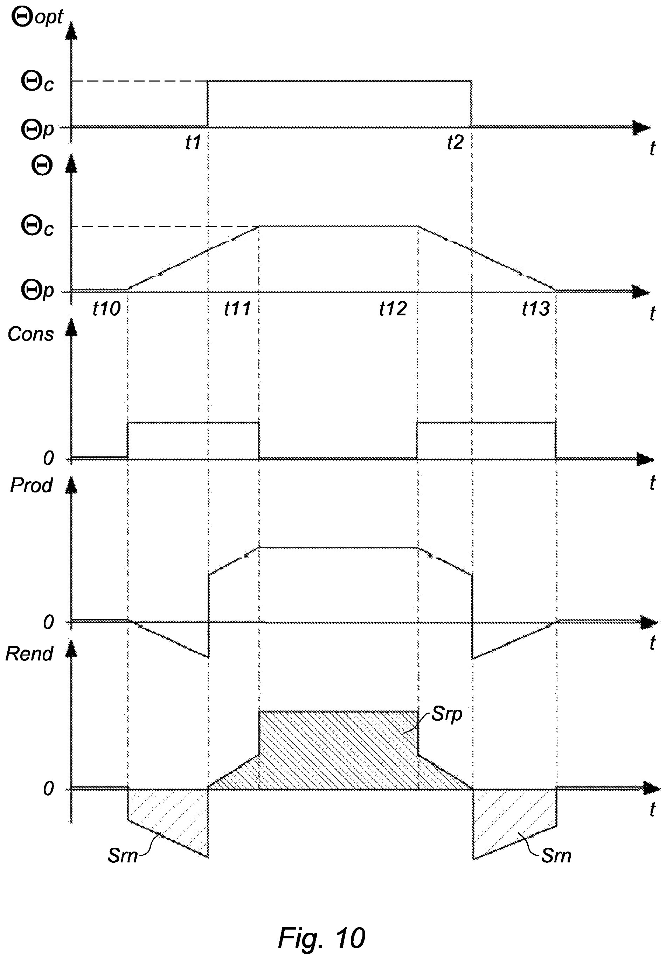

- la figure 10 représente cinq courbes prévisionnelles (identiques à celles de la figure 9) calculées pour un second scénario potentiel.

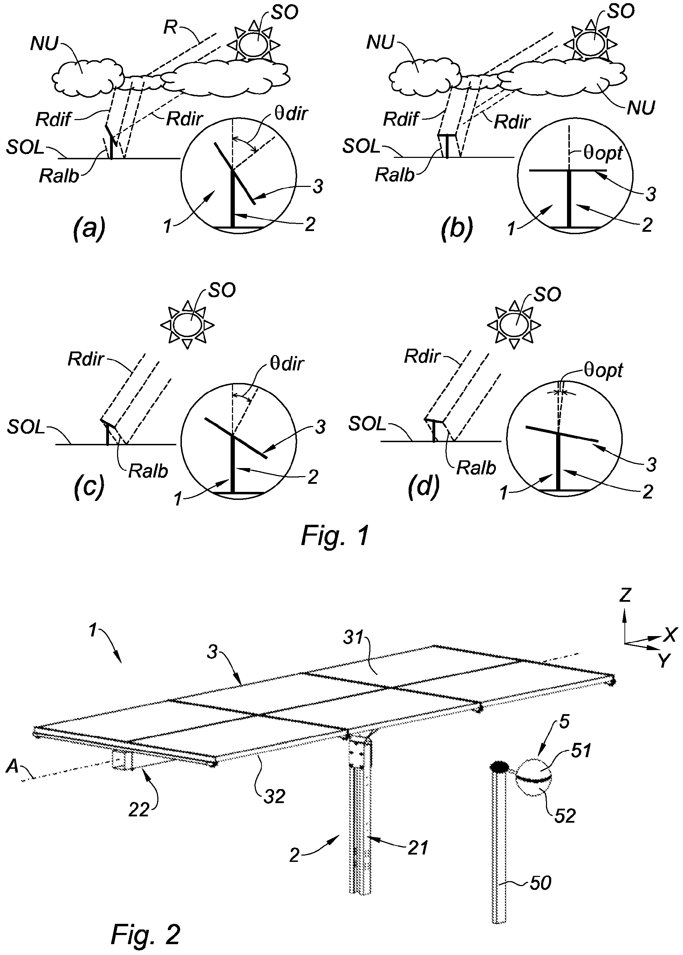

En référence à la figure 2, un module solaire 1 comprend :

- un suiveur solaire 2 mono-axe orientable autour d'un axe de rotation A pour une orientation du module solaire 1 permettant de suivre le soleil lors de son élévation et de sa descente d'est en ouest ; et
- un dispositif photovoltaïque 3 supporté par le suiveur solaire 1 et présentant une face supérieure 31 photo-active faisant face au ciel et munie de cellules photovoltaïques et une face inférieure 32 photo-active faisant face au sol et munie de cellules photovoltaïques.

Le suiveur solaire 2 comprend une structure fixe 21 d'ancrage au sol constituée d'un ou plusieurs pylônes ancrés au sol, par exemple par battage, vissage, boulonnage, lestage, ou autre moyen équivalent permettant de fixer et stabiliser au sol la structure fixe 21. Le suiveur solaire 2 comprend en outre une plateforme 22 mobile montée à rotation sur la structure fixe 21 selon l'axe de rotation A, et plus spécifiquement montée à rotation sur les extrémités supérieures du ou des pylônes. Cette plateforme 22 supporte le dispositif photovoltaïque 3 qui est composé d'un ou plusieurs panneaux photovoltaïques à technologie bifaces.

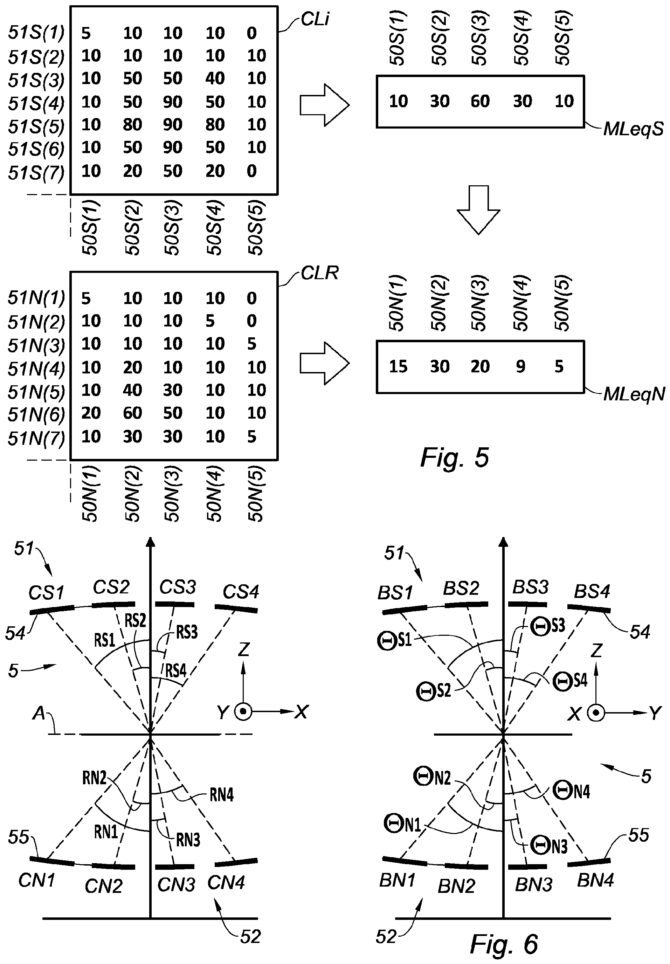

En référence aux figures 2 et 6, l'axe de rotation A est substantiellement horizontal et dirigé selon un axe longitudinal X selon la direction nord-sud. Lorsque le module solaire 1 est à plat (comme visible sur les figures 2 et 6), les faces 31, 32 du dispositif photovoltaïque 3 s'étendent selon un plan horizontal défini par l'axe longitudinal X et par un axe transversal Y selon la direction est-ouest, de manière orthogonale à un axe vertical Z.

Pour la suite de la description, l'orientation du module solaire 1 (autrement appelée orientation ou angle d'inclinaison du suiveur solaire 2 ou du dispositif photovoltaïque 3) correspond à l'angle de la normale à la face supérieure 31 vis-à-vis de l'axe vertical Z pris dans le plan (Y, Z). Ainsi, lorsque le module solaire 1 est à plat, cette orientation est de 0 degré.

Le module solaire 1 comprend également un système de mesure 5 propre à mesurer une répartition de la luminance solaire incidente et une répartition de la luminance solaire réflective. Ce système de mesure 5 peut être associé à un unique module solaire 1 ou, de manière économique, être partagé avec plusieurs modules solaires. Le système de mesure 5 est fixe, et peut être surélevé par rapport au sol en étant par exemple monté sur un poteau 50.

Ce système de mesure 5 comprend deux dispositifs de mesure 51, 52, à savoir :

- un dispositif de mesure supérieur 51 propre à mesurer une répartition de la luminance solaire incidente issue du rayonnement solaire dit incident (rayonnement solaire direct Rdir et rayonnement solaire diffus Rdif) qui provient du ciel et qui est propre à atteindre la face supérieure 31 du dispositif photovoltaïque 3 ; et
- un dispositif de mesure inférieur 52 propre à mesurer une répartition de la luminance solaire réflective issue du rayonnement solaire albédo Ralb qui correspond à la réflexion du rayonnement solaire sur le sol et qui est propre à atteindre la face inférieure 32 du dispositif photovoltaïque 3.

Ces deux dispositifs de mesure 51, 52 peuvent être séparés ou assemblés ensemble, comme dans l'exemple de la figure 2. Avec ces dispositifs de mesure 51, 52, chaque répartition de la luminance solaire concernée (incidente ou réflective) est établie selon plusieurs angles d'élévation (angle mesuré par rapport à l'axe vertical Z dans un plan vertical parallèle à l'axe longitudinal X) correspondants à plusieurs orientations du module solaire 1 autour de l'axe de rotation A. Autrement dit, ces angles d'élévation sont à rapprocher des orientations du module solaire 1.

Le module solaire 1 comprend en outre un système d'actionnement (non illustré sur la figure 2 et portant la référence numérique 6 sur la figure 10) qui assure la mise en rotation de la plateforme 22 selon l'axe de rotation A.

Ce système d'actionnement 6 comprend un actionneur, par exemple du type vérin (électrique, pneumatique ou hydraulique) ou moteur électrique (par exemple moteur rotatif). Ce système d'actionnement 6 comprend en outre un système mécanique de transmission du mouvement en sortie de l'actionneur (mouvement rotatif pour un moteur rotatif, ou mouvement linéaire pour un vérin) en un mouvement de rotation de la plateforme 22. Ce système mécanique de transmission peut être, à titre d'exemple non limitatif, un système à parallélogramme déformable, un système de renvoi par poulie, un système à pignon, un système à chaîne, un système à courroie, un système à crabot, un système avec arbre de transmission, un système à bielle, etc.

Il est envisageable que l'actionneur 6 soit propre au module solaire 1, ou bien soit partagé entre plusieurs modules solaires. Dans le cas où l'actionneur est partagé, les plateformes 22 des différents suiveurs solaires sont avantageusement couplées en rotation, pour une rotation synchrone sous l'effet de l'actionneur commun.

En référence à la figure 8, le module solaire 1 comprend également une unité de contrôle 4 du type carte électronique, qui est en liaison avec le système d'observation 5 afin de recevoir ses observations (ou données d'observations) et qui est également en liaison avec le système d'actionnement 6 pour piloter son fonctionnement et ainsi piloter la rotation de la plateforme 22, et donc l'orientation du module solaire 1.

Cette unité de contrôle 4 comprend plusieurs modules, à savoir :

- un module cartographique 40 prévu pour convertir la mesure faite par le dispositif de mesure supérieur 51 en une cartographie de luminance incidente CLI, et convertir la mesure faite par le dispositif de mesure inférieur 52 en une cartographie de luminance réflective CLR, et en associant à chaque cartographie de luminance CLI, CLR un instant temporel t ;
- un module d'archivage 41 qui archive chaque cartographie de luminance CLI, CLR générée par le module cartographique 40 ;
- un module de calcul prévisionnel 42 qui calcule une évolution future de la répartition de la luminance solaire incidente et de la répartition de la luminance solaire réflective (basée sur un calcul de prévision météorologique), et plus précisément calcule des cartographies prévisionnelles de luminance incidente CLIP et des cartographies prévisionnelles de luminance réflective CLRP pour des instants futurs, ce module de calcul prévisionnel 42 réalisant ces calculs sur la base des cartographies de luminance CLI, CLR générées en temps réel par le module cartographique 40 et sur la base des cartographies de luminance CLI, CLR passées et archivées dans le module d'archivage 41 ;
- un module de calcul d'orientation optimale 43 qui calcule l'orientation optimale Oopt pour chaque couple de cartographies de luminance CLI, CLR générée en temps réel par le module cartographique 40 (autrement dit l'orientation optimale à l'instant présent) et également pour chaque couple de cartographies prévisionnelles CLIP, CLRP issue du module de calcul prévisionnel 42 (autrement dit les orientations optimales pour des instants futurs) ;
- un module d'évolution de l'orientation optimale 44 qui récupère toutes les orientations optimales issues du module de calcul d'orientation optimale 43 afin d'établir l'évolution de l'orientation optimale, et donc de prévoir et anticiper les changements d'orientation optimale ;
- un module de paramétrage 45 du module solaire 1 qui comprend des paramètres relatifs à la vitesse de déplacement du système d'actionnement 6 (et donc à la vitesse nécessaire pour un changement d'orientation), des paramètres relatifs à la consommation d'énergie nécessaire au système d'actionnement 6 pour un changement d'orientation, des paramètres relatifs à la production d'énergie solaire générée par les faces 31, 32 du dispositif photovoltaïque 3 en fonction de la luminance solaire reçue sur chaque face 31, 32, et des paramètres relatifs à un taux d'usure des organes mécaniques du suiveur solaire 2 sollicités lors d'un changement d'orientation du module solaire 1, ces paramètres étant notamment fonction de l'écart angulaire entre le début et la fin d'un changement d'orientation ;
- un module de calcul astronomique 46 qui calcul en temps réel la position du soleil, et donc l'orientation directe définie par la direction du rayonnement solaire direct au niveau du module solaire 1 ;
- un module d'asservissement 47 qui calcule l'asservissement de l'orientation du module solaire 1, en fonction de l'évolution de l'orientation optimale provenant du module 44, des différents paramètres provenant du module 45 et de l'orientation directe provenant du module 46, où ce module d'asservissement 47 sort une consigne d'orientation à destination du système d'actionnement 6 afin de piloter des changements d'orientation du module solaire 1, autrement dit de la plateforme 22 du suiveur solaire 2.

Il est à noter que cette unité de contrôle 4 peut être propre au module solaire 1, ou bien être partagée entre plusieurs modules solaires, et de préférence entre plusieurs suiveurs solaires réunis en ligne (s'étendant de nord en sud) au sein d'installations solaires linéaires.

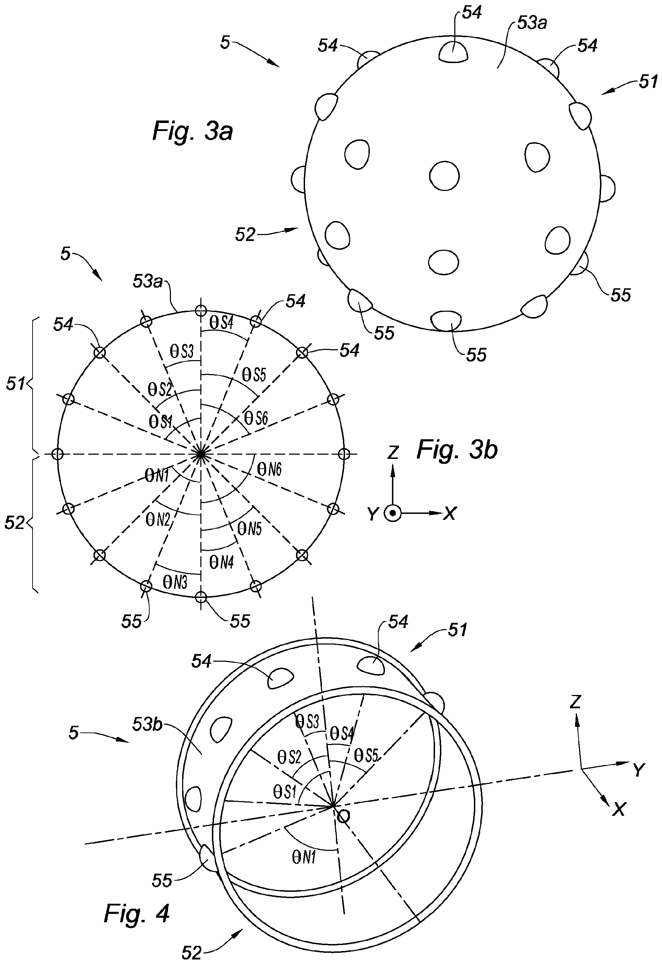

Dans les deux modes de réalisation illustrés sur les figures 3a et 3b (premier mode de réalisation) et sur la figure 4 (second mode de réalisation), le système de mesure 5 comprend un support 53a en forme de dôme sphérique pour le premier mode de réalisation ou en forme d'anneau circulaire 53b pour le second mode de réalisation.

Dans chaque mode de réalisation, le support 53a, 53b supporte des capteurs photosensibles 54, 55, notamment du type capteur pyranométrique, avec des capteurs photosensibles supérieurs 54 sur le haut (faisant face au ciel) et des capteurs photosensibles inférieurs 55 sur le bas (faisant face au sol) ; ces capteurs photosensibles 54, 55 sont notamment du type capteur pyranométrique.

Les capteurs photosensibles supérieurs 54 forment, avec la partie haute du support 53a, 53b concerné, le dispositif de mesure supérieur 51, tandis que les capteurs photosensibles inférieurs 55 forment, avec la partie basse du support 53a, 53b concerné, le dispositif de mesure inférieur 52.

Les capteurs photosensibles 54, 55 sont répartis selon plusieurs angles d'élévation dits d'élévation $\Theta Si$ pour les capteurs photosensibles supérieurs 54 et $\Theta Nk$ pour les capteurs photosensibles inférieurs 55 ; ces angles d'élévation $\Theta Si$, $\Theta Nk$ étant mesurés vis-à-vis de l'axe vertical Z dans le plan (Y, Z), le repère (X, Y, Z) étant centré sur le centre O du dôme sphérique 53a ou le centre O de l'anneau circulaire 53b ; ces angles d'élévation $\Theta Si$, $\Theta Ni$ étant donc à rapprocher de l'orientation du module solaire 1.

De manière générale, les capteurs photosensibles 54, 55 sont positionnées le long de plusieurs bandes (ou lignes) réparties selon plusieurs angles d'élévation $\Theta Si$, $\Theta Nk$. Ces angles d'élévation $\Theta Si$, $\Theta Nk$ sont également visibles sur la figure 6. Les bandes sont réparties entre des bandes supérieures BSi qui comprennent un ou plusieurs capteurs photosensibles supérieurs 54, et des bandes inférieures BNk qui comprennent un ou plusieurs capteurs photosensibles inférieurs 55.

Dans le premier mode de réalisation, sur chaque bande sont présents un ou plusieurs capteurs photosensibles 54, 55. Dans le cas d'une bande de plusieurs capteurs photosensibles 54, 55, les capteurs photosensibles 54, 55 d'une même bande sont réparties selon plusieurs angles dits d'azimut RSj pour les capteurs photosensibles supérieurs 54 et RNm pour les capteurs photosensibles inférieurs 55 ; ces angles d'azimut RSj, RNm étant mesurés vis-à-vis de l'axe vertical Z dans le plan (X, Z). Ainsi, en plus d'être réparties selon les bandes à différents angles d'élévation ΘSi, ΘNk, les capteurs photosensibles 54, 55 sont également réparties selon des colonnes à différents angles d'azimut RSj, RNm. Ces angles d'azimut RSj, RNm sont visibles sur la figure 6. Les colonnes sont réparties entre des colonnes supérieures CSi qui comprennent un ou plusieurs capteurs photosensibles supérieurs 54, et des colonnes inférieures CNm qui comprennent un ou plusieurs capteurs photosensibles inférieurs 55.

Dans le second mode de réalisation, sur chaque bande est présent un unique capteur photosensible 54 ou 55, de sorte qu'il y a une seule colonne supérieure et une seule colonne inférieure.

Sur la figure 6, dans un exemple de premier système de mesure 5, les capteurs photosensibles supérieurs 54 sont réparties selon quatre bandes supérieures BS1, BS2, BS3, BS4 qui sont associées à quatre angles d'élévation ΘS1, ΘS2, ΘS3, ΘS4, et selon quatre colonnes supérieures CS1, CS2, CS3, CS4 qui sont associées à quatre angles d'azimut RS1, RS2, RS3, RS4, et les capteurs photosensibles inférieurs 55 sont réparties selon quatre bandes inférieures BN1, BN2, BN3, BN4 qui sont associées à quatre angles d'élévation ΘN1, ΘN2, ΘN3, ΘN4, et selon quatre colonnes inférieures CN1, CN2, CN3, CN4 qui sont associées à quatre angles d'azimut RN1, RN2, RN3, RN4.

De manière générale, plus le système de mesure 5 comprend de capteurs photosensibles 54, 55, et en particulier plus le système d'observation 2 comprend de bandes de capteurs photosensibles 54, 55, et meilleures seront la résolution et la précision angulaire.

Ces capteurs photosensibles 54, 55 peuvent être de la même technologie que les faces 31, 32 associées du dispositif photovoltaïque 3 afin de pouvoir appliquer une pondération dépendant de la gamme de longueur d'onde utile aux faces 31, 32. De préférence, ces capteurs photosensibles 54, 55 feront l'objet d'un étalonnement préalable pour obtenir une meilleure précision.

Avec le premier système de mesure 5, en récupérant les mesures de la luminosité de chaque capteur photosensible 54, 55 et en connaissant les angles d'élévation ΘSi, ΘNk des différentes bandes et les angles d'azimut RSj, RNm des différentes colonnes, le module cartographique 40 convertit une mesure faite par le système de mesure 5 en un couple de cartographies comprenant une cartographie de luminance incidente CLI (obtenue avec les mesures issues des capteurs photosensibles supérieurs 54) et une cartographie de luminance réflective CLR (obtenue avec les mesures issues des capteurs photosensibles inférieurs 55).

En préalable, le module cartographique 40 met en oeuvre une pondération fréquentielle appliquée sur mes mesures faites par les capteurs photosensibles 54, 55 ; cette pondération fréquentielle consistant à appliquer un filtre fréquentiel sur ces mesures qui est fonction à la fois de la réponse en fréquence des capteurs photosensibles 54, 55 et de la bande fréquentielle utile (ou réponse spectrale) des cellules photovoltaïques du dispositif photovoltaïque 3.

Le module cartographique 40 met ensuite en oeuvre un éventuel traitement consistant à corriger les mesures des défauts ou bruits parasites. Puis, le module cartographique 40 met en oeuvre un calcul de la répartition de la luminance solaire (en rapprochant les mesures des capteurs photosensibles 54, 55 à leurs coordonnées dans l'espace ou bien directement à leurs angles d'élévation respectifs) afin de générer une cartographie de luminance incidente brute et une cartographie de luminance réflective brute, formant chacune une carte (ou matrice) de luminance solaire répartie selon plusieurs bandes associées respectivement à différents angles d'élévation ΘSi, ΘNk et, le cas échéant, selon plusieurs colonnes associées respectivement à différents angles d'azimut RSj, RNm.

Enfin, le module cartographique 40 applique sur chaque cartographie brute un coefficient propre dépendant de la variation de la sensibilité des capteurs photosensibles 54, 55, afin de générer la cartographie de luminance incidente CLI et la cartographie de luminance réflective CLR qui seront exploitées pour établir l'orientation optimale. En effet, les amplitudes (ou luminosités) des mesures délivrées par les capteurs photosensibles 54, 55 sont proportionnellement liées aux valeurs du rayonnement solaire (incident ou réflectif), de sorte que ces coefficients prennent en compte ces proportionnalités dépendant des variations de sensibilité des capteurs photosensibles 54, 55 respectifs.

La cartographie de luminance incidente CLI forme une carte (ou matrice) de luminance solaire répartie selon :

- plusieurs bandes supérieures 50S(i) (i entier) établies selon une première direction parallèle à l'axe de rotation A (et donc parallèle à l'axe X) et associées respectivement à différents angles d'élévation ΘSi, de sorte que chaque bande 50S(i) correspond à un angle d'élévation ΘSi (chaque bande 50S(i) de la cartographie CLI étant associée à une bande BSi du système de mesure 5) ; et
- plusieurs colonnes supérieures 51 S(j) (j entier) établies selon une seconde direction horizontale et orthogonale à l'axe de rotation A (et donc parallèle à l'axe Y) et associées respectivement à différents angles d'azimut RSj (chaque colonne 51S(j) de la cartographie CLI étant associée à une colonne CSj du système de mesure 5).

Ainsi, la cartographie de luminance incidente CLI comprend N cases (où N=[i x j]), et à chaque case correspond une valeur (absolue ou relative) de luminance solaire LumS(i, j). Il est envisageable que certaines cases soient vides, car les bandes BSi ne comprennent pas nécessairement le même nombre de capteurs photosensibles supérieurs 54, et dans ce cas la valeur de luminance solaire LumS(i, j) est nulle pour une case vide.

Dans l'exemple de la figure 5, la cartographie de luminance incidente CLI comprend cinq bandes 50S(1), ..., 50S(5) et sept colonnes 51S(1), ..., 51S(7), et les valeurs de luminance solaire sont exprimées de manière relative en pourcentage.

La cartographie de luminance réflective CLR forme une carte (ou matrice) de luminance solaire répartie selon :

- plusieurs bandes inférieures 50N(k) (k entier) établies selon une première direction parallèle à l'axe de rotation A (et donc parallèle à l'axe X) et associées respectivement à différents angles d'élévation ONk, de sorte que chaque bande 50N(k) correspond à un angle d'élévation ONk (chaque bande 50N(k) de la cartographie CLR étant associée à une bande BNk du système de mesure 5) ; et
- plusieurs colonnes inférieures 51 N(m) (m entier) établies selon une seconde direction horizontale et orthogonale à l'axe de rotation A (et donc parallèle à l'axe Y) et associées respectivement à différents angles d'azimut RNm (chaque colonne 51N(m) de la cartographie CLR étant associée à une colonne CNm du système de mesure 5).

Ainsi, la cartographie de luminance réflective CLR comprend P cases (où P=[k x m]), et à chaque case correspond une valeur (absolue ou relative) de luminance solaire LumN(k, m). Il est envisageable que certaines cases soient vides, car les bandes BNk ne comprennent pas nécessairement le même nombre de capteurs photosensibles inférieurs 55, et dans ce cas la valeur de luminance solaire LumN(k, m) est nulle pour une case vide.

Dans l'exemple de la figure 5, la cartographie de luminance réflective CLR comprend cinq bandes 50N(1), ..., 50N(5) et sept colonnes 51N(1), ..., 51N(7), et les valeurs de luminance solaire sont exprimées de manière relative en pourcentage.

A partir d'un tel couple de cartographies CLI, CLR, le module de calcul d'orientation optimale 43 met en oeuvre un calcul basé sur ces cartographies CLI, CLR pour extraire une orientation optimale Oopt qui correspond à un angle d'élévation associé à un maximum d'éclairement solaire sur les deux faces 31, 32 du dispositif photovoltaïque 3.

Pour ce calcul, et en se référant aux figures 5 et 6, le module de calcul d'orientation optimale 43 met en oeuvre une succession de sous-étapes. Cette succession de sous-étape constitue un exemple de mode de calcul ou d'algorithme, et l'invention ne saurait bien entendu pas se limiter à cet exemple.

Dans une première sous-étape, le module de calcul d'angle d'inclinaison optimal 43 calcule, pour chaque bande 50S(i) de la cartographie de luminance incidente CLI, une valeur de luminance équivalente LeqS(i) à partir de l'ensemble des valeurs de luminance LumS(i, j) prises dans la bande 50S(i). Pour chaque bande 50S(i), la valeur de luminance équivalente LeqS(i) de la bande 50S(i) est fonction des valeurs de luminance LumS(i, j) prises dans la bande 50(i) et des angles d'azimut RSj des différentes colonnes 51S(j) selon la formule suivante (en se référant à la figure 6) :

$$LeqS(i) \quad = \sum_{j} LumS(i,j) \quad \times \cos RSj$$

On obtient ainsi une matrice MLeqS des valeur de luminance équivalente LeqS(i) associées aux différentes bandes 50S(i).

De même, le module de calcul d'angle d'inclinaison optimal 43 calcule, pour chaque bande 50N(k) de la cartographie de luminance réflective CLR, une valeur de luminance équivalente LeqN(k) à partir de l'ensemble des valeurs de luminance LumN(k, m) prises dans la bande 50N(k). Pour chaque bande 50N(k), la valeur de luminance équivalente LeqS(i) de la bande 50N(k) est fonction des valeurs de luminance LumN(k, m) prises dans la bande 50N(k) et des angles d'azimut RSm des différentes colonnes 51N(m) selon la formule suivante (en se référant à la figure 6) :

$$LeqN(k) \quad = \sum_{jm} LumN(k,m) \quad \times \cos RNm$$

On obtient ainsi une matrice MLeqN des valeur de luminance équivalente LeqN(k) associées aux différentes bandes 50N(k).

Dans une seconde sous-étape, le module de calcul d'orientation optimale 43 calcule, pour plusieurs angles d'élévation théoriques Oth, une valeur de luminance perçue Lperc($\Theta$th) par les faces 31, 32 du module solaire 1 à partir des valeurs de luminance équivalentes LeqS(i) et LeqN(k) calculées pour toutes les bandes lors de la première sous-étape, et à partir des écarts angulaires entre les angles d'élévation théoriques Θth et les angles d'élévation ΘSi, ΘNk associées aux bandes, selon la formule suivante (en se référant à la figure 6) :

$$Lperc(\theta th) = \sum_i LeqS(i).\cos(\theta Si - \theta th).p(i)$$

$$+ \sum_k LeqN(k).\cos(\theta Nk - \theta th).p(k)$$

Où p(i) = 1 si abs(ΘSi - Θth) < 90 degrés, et p(i) = 0 sinon ;
et p(k) = 1 si abs(ΘNk - Θth) < 90 degrés, et p(k) = 0 sinon

Les coefficients p(i), p(k) tiennent compte que, au-delà d'un écart angulaire de 90 degrés, le rayonnement n'est pas reçu par le ou les capteurs photosensibles 54, 55 correspondants.

On obtient ainsi une courbe de variation de la valeur de luminance perçue Lperc(Θth) en fonction de l'angle d'élévation théorique Θth

Dans une dernière sous-étape, le module de calcul d'orientation optimale 43 retient l'orientation optimale Θopt comme étant l'angle d'élévation théorique Θth associé à un maximum de la valeur de luminance perçue Lperc(Θth).

Dans le cas où le système de mesure 5 est conforme au second mode de réalisation, les cartographies CLI, CLR sont équivalentes aux matrices MLeqS et MLeqN, de sorte que les calculs mis en oeuvre par le module de calcul d'orientation optimale 43 démarre à la seconde sous-étape.

Il est à noter que, dans une variante non illustré, les deux dispositifs de mesure 51, 52 sont réalisés sous la forme de deux caméras dos à dos, notamment du type caméra hémisphérique, avec une caméra supérieure tournée vers le ciel afin d'extraire des images du ciel et mesurer la répartition de la luminance solaire incidente, et une caméra inférieure tournée vers le sol afin d'extraire des images du sol et mesurer la répartition de la luminance solaire réflective. De manière avantageuse, chaque caméra est conformée pour prendre des images dans une largeur spectrale suffisante pour la technologie des cellules photovoltaïques des faces 31, 32 du dispositif photovoltaïque 3. Chaque caméra délivre une image brute, respectivement du ciel et du sol, qui est ensuite délivré au module cartographique 40 pour convertir ces deux images brutes en des cartographies CLI, CLR équivalentes à celles décrites ci-dessus, après une succession d'étapes de traitement d'image pour partir des images brutes jusqu'aux cartographies CLI, CLR :

- étape de pondération fréquentielle ;
- étape de traitement consistant à corriger les défauts sur les images après pondération (traitement de suppression du bruit, traitement de l'éblouissement ou « blooming », traitement de la saturation, ...) ;
- calcul (soit pixel par pixel, soit zone par zone où chaque zone comprend plusieurs pixels) de la répartition de la luminance solaire ;
- application sur chaque image traitée d'un coefficient propre dépendant de la variation de la sensibilité de la caméra concernée.

Le module de calcul prévisionnel 42 calcule des cartographies prévisionnelles de luminance incidente CLIP et des cartographies prévisionnelles de luminance réflective CLRP pour des instants futurs (t+nP), où n entier non nul et P la période de l'observation réalisée de manière périodique et répétitive par le système de mesure 5. Ces cartographies prévisionnelles CLIP, CLRP sont établies sur la base des cartographies CLI, CLR générées en temps réel par le module cartographique 40 et sur la base des cartographies CLI, CLR passées archivées dans le module d'archivage 41.

A partir des cartographies de luminance incidente CLI successives, le module de calcul prévisionnel 42 a accès, plus ou moins précisément, à une localisation des nuages, ainsi qu'à leurs dimensions, leurs sens de déplacement et leurs vitesses de déplacement. Ainsi, le module de calcul prévisionnel 42 peut mettre en oeuvre un calcul prévisionnel de la position des nuages à des instants futurs.

Le calcul prévisionnel est basé sur une prise en considération de l'évolution passée de la répartition de la luminance solaire incidente, entre plusieurs instants passés et l'instant présent, et en particulier de l'évolution de la répartition de la luminance solaire incidente et de la vitesse d'évolution de la luminance solaire incidente.

Ce calcul prévisionnel peut être basé sur une fenêtre temporelle glissante, c'est-à-dire une fenêtre comprenant un nombre prédéfini des dernières cartographies passées.

Ce calcul prévisionnel est employé pour établir des cartographies prévisionnelles CLIP, CLRP (ou prévisions de cartographie) à court-terme. A titre d'exemple non limitatif, la notion de court-terme couvre des calculs sur un horizon futur d'un maximum de dix à trente minutes, voire d'un maximum d'une à deux heures. Il est bien entendu envisageable de prévoir des calculs prédictifs à plus long terme.

L'algorithme mis en oeuvre pour un tel calcul prévisionnel peut éventuellement intégrer des améliorations telles que :

- la prise en compte des erreurs de prévision pour améliorer les prévisions futures (en effet, il est possible de comparer les cartographies présentes avec les prévisions cartographiques faites plus tôt, afin d'en tirer des enseignements sur le calcul prévisionnel et l'améliorer) ;
- reconnaître les types de nuage en fonction des cartographies de luminance incidente CLI grâce à une base de données et/ou grâce à des analyses ou relevés effectués dans le passé, de manière à permettre de faire des prévisions à plus long terme en fonction des types de nuages.

L'algorithme mis en oeuvre pour un tel calcul prévisionnel peut également tenir compte de l'évolution de la position du soleil dans le ciel, en particulier si le calcul prévisionnel se fait pour des instants futurs suffisamment lointains (par exemple au-delà de 30 minutes) pour que le changement de la position du soleil ait une influence sur l'évolution de la luminance solaire incidente et réflective. Cette prise en compte de la position du soleil dans le calcul prévisionnel est illustrée par la flèche de liaison en trait interrompu sur la figure 8 entre le module de calcul prévisionnel 42 et le module de calcul astronomique 46.

Comme visible sur la figure 7, le module de calcul prévisionnel 42 établit des cartographies prévisionnelles CLIP, CLRP, et à chaque couple de cartographies prévisionnelles CLIP, CLRP est associé une orientation optimale Oopt prévisionnel calculé par le module de calcul d'orientation optimale 43, selon la même méthode de calcul précédemment décrite.

Ainsi, le module d'évolution de l'orientation optimale 44 récupère toutes les orientations optimales (celles des cartographies CLI, CLR passées, celles des cartographies CLI, CLR présentes, et ceux des cartographies prévisionnelles CLIP, CLRP) et établit une évolution future de l'orientation optimale $\Theta$opt, permettant ainsi de prévoir et anticiper les changements d'orientation optimal.

Enfin, le module d'asservissement 47 asservit l'orientation du module solaire 1 en fonction de l'évolution passée et future de l'orientation optimale $\Theta$opt, et aussi en fonction de la consommation d'énergie Cons nécessaire pour modifier l'orientation du module solaire 1, de la vitesse de déplacement en rotation du module solaire 1, et de la production d'énergie solaire Prod supplémentaire obtenue avec un changement d'orientation.

En référence aux figures 9 et 10, le module d'asservissement 47 se base de l'évolution future de l'orientation optimale Oopt (première courbe en partant du haut).

Dans l'exemple donné, l'orientation optimale Oopt prévisionnel change de valeur pour atteindre une valeur cible Oc, par exemple du fait d'une prévision de passage d'un nuage devant le soleil, de l'instant futur t1 jusqu'à l'instant futur t2, avant de revenir à sa valeur initiale.

Le module d'asservissement 47 établi un scénario potentiel au cours duquel l'orientation $\Theta$ du module solaire 1 est modifié en partant d'une orientation présente $\Theta$p jusqu'à atteindre l'orientation optimale cible Oc, afin de suivre la prévision d'évolution de l'orientation optimale.

Dans l'exemple donné, le scénario consiste à asservir l'orientation $\Theta$ sur la première courbe, et cet asservissement dépend de la vitesse de déplacement en rotation du module solaire 1, afin d'obtenir une deuxième courbe de l'évolution de l'orientation $\Theta$ du module solaire 1 au cours du changement d'orientation du scénario. En effet, le module solaire 1 présente un temps de déplacement nécessaire pour arriver à atteindre l'orientation optimale cible $\Theta$c.

Grâce au calcul prévisionnel, le déplacement du module solaire 1 est anticipé, en l'occurrence en démarrant plus tôt à l'instant t10 (antérieur à t1) jusqu'à atteindre la valeur cible Oc à t11 (postérieur à t1), puis en démarrant de manière anticipée le retour à l'instant t11 (antérieur à t2) jusqu'à revenir à l'orientation présente Op à l'instant t13 (postérieur à t2).

Le module d'asservissement 47 détermine l'évolution de la consommation d'énergie Cons nécessaire pour modifier l'orientation du module solaire 1 selon la deuxième courbe, afin d'obtenir une troisième courbe de l'évolution de cette consommation d'énergie Cons ; le module solaire 1 consommant durant les phases de changement d'orientation, entre les instants t10 et t11 puis entre les instants t12 et t13.

Le module d'asservissement 47 détermine l'évolution de la production Prod supplémentaire (ou gain de production) attendue en suivant la deuxième courbe d'évolution de l'orientation $\Theta$ plutôt qu'en restant à l'orientation présente $\Theta$p, afin d'obtenir une quatrième courbe de l'évolution de cette production Prod. Cette production Prod supplémentaire correspond donc au gain de production attendu si l'on suit le scénario plutôt que de rester à la situation initiale ou présente sur l'orientation présente $\Theta$p.

Dans l'exemple donné, la production Prod est négative entre les instants t10 et t1 et entre les instants t2 et t13 qui correspondent à des périodes où l'orientation $\Theta$ s'éloigne de l'orientation optimale $\Theta$opt, et la production Prod est positive entre les instants t1 et t2 qui correspondent à une période où l'orientation $\Theta$ se rapproche de voire est égal à l'orientation optimale Θopt.

Le module d'asservissement 47 détermine l'évolution du rendement énergétique Rend attendu basée sur la différence entre la production Prod et la consommation d'énergie Cons, donnant une cinquième courbe correspondant à la différence entre la quatrième courbe et la troisième courbe, autrement dit Rend = Prod - Cons.

Dans l'exemple donné, le rendement Rend est négatif entre les instants t10 et t1 et entre les instants t2 et t13, et le rendement Rend est positif entre les instants t1 et t2.

Enfin, le module d'asservissement 47 suit le scénario (autrement dit asservit le module solaire selon la deuxième courbe) si le rendement énergétique est globalement positif pour le scénario, sinon l'orientation du module solaire 1 est maintenue à l'orientation présente Θp.

Le rendement énergétique global est établi en étudiant le rendement sur toute la période du scénario.

Dans l'exemple de la figure 9, le rendement global est négatif, car la somme des surfaces Srn où le rendement est négatif (entre t10 et t1 et entre t2 et t13) est supérieure à la surface Srp où le rendement est positif (entre t1 et t2). L'exemple de la figure 11 correspond par exemple à une situation où le temps de passage prévisionnel (correspondant à l'intervalle [t2 - t1]) d'un nuage devant le soleil est trop court comparativement au temps nécessaire pour un changement d'orientation (correspondant à l'intervalle [t1 - 110] ou [t13 - t2]).

Dans l'exemple de la figure 10, le rendement global est positif, car la somme des surfaces Srn où le rendement est négatif (entre t10 et t1 et entre t2 et t13) est inférieure à la surface Srp où le rendement est positif (entre t1 et t2). L'exemple de la figure 10 correspond par exemple à une situation où le temps de passage prévisionnel (correspondant à l'intervalle [t2 - t1]) d'un nuage devant le soleil est long comparativement au temps nécessaire pour un changement d'orientation (correspondant à l'intervalle [t1 - 110] ou [t13 - t2]).

Ainsi, dans l'exemple de la figure 9, le module d'asservissement 47 ne suit pas le scénario et maintient l'orientation à la valeur présente Θp, tandis que dans l'exemple de la figure 10, le module d'asservissement 47 suit le scénario et assure un asservissement de l'angle d'inclinaison selon la deuxième courbe.

En se référant aux figures 1(a) et 1(b), le procédé conforme à l'invention est mis en oeuvre dans la figure 1(b) avec une orientation du module solaire 1 sur une orientation optimale Θopt distincte de l'orientation directe Θdir (orientation sur le rayonnement directe en face du soleil SO), tandis que sur la figure 1(a) est mise en oeuvre une orientation du module solaire 1 sur l'orientation directe Θdir. Avec la présence de nuages NU devant le soleil SO, le rayonnement solaire incident direct Rdir est plus faible que le rayonnement solaire incident diffus Rdif, de sorte que l'asservissement sur l'orientation directe Θdir procure un plus faible rendement par rapport à l'asservissement sur l'orientation optimale Oopt établie grâce au procédé (qui tient compte du rayonnement diffus Rdif et également du rayonnement albédo Ralb), de sorte que le procédé permet une augmentation de la production énergétique par le module solaire 1.

En se référant aux figures 2(a) et 2(b), le procédé conforme à l'invention est mis en oeuvre dans la figure 2(b) avec une orientation du module solaire 1 sur une orientation optimale Θopt distincte de l'orientation directe Θdir, tandis que sur la figure 2(a) est mise en oeuvre une orientation du module solaire 1 sur l'orientation directe Θdir. Avec la présence d'un fort rayonnement solaire albédo Ralb du à un sol SOL présentant un fort pouvoir réfléchissant, l'asservissement sur l'orientation directe Θdir s'avère procurer un plus faible rendement par rapport à l'asservissement sur l'orientation optimale Θopt établie grâce au procédé qui tient compte du fort rayonnement albédo Ralb, car l'asservissement sur l'orientation directe Θdir limitera la prise en compte du rayonnement albédo Ralb.

Bien entendu l'exemple de mise en oeuvre évoqué ci-dessus ne présente aucun caractère limitatif et d'autres améliorations et détails peuvent être apportés au module solaire selon l'invention, sans pour autant sortir du cadre de l'invention où d'autres types de structure fixe ou de plateforme peuvent par exemple être réalisés.

## Revendications

**1.** Procédé de pilotage de l'orientation (Θ) d'un module solaire (1) supporté par

- un suiveur solaire (2) mono-axe orientable autour d'un axe de rotation (A) pour une orientation du module solaire (1) permettant de suivre le soleil (SO) lors de son élévation et de sa descente d'est en ouest ; et
- le module solaire (1) comprenant un dispositif photovoltaïque (3) et présentant une face supérieure (31) photo-active faisant face au ciel et munie de cellules photovoltaïques et une face inférieure (32) photo-active faisant face au sol (SOL) et munie de cellules photovoltaïques;

le procédé comprenant:

- mesure d'une répartition de la luminance solaire dite incidente issue du rayonnement incident qui est propre à atteindre la face supérieure (31) du dispositif photovoltaïque (3), ladite répartition de la luminance solaire incidente étant établie selon plusieurs angles d'élévation (OSi) correspondants à plusieurs orientations du module solaire (1) autour de l'axe de rotation (A);
- mesure d'une répartition de la luminance solaire dite réflective issue du rayonnement solaire dit albédo (Ralb) qui correspond à la réflexion du rayonnement solaire sur le sol (SOL) et qui est propre à atteindre la face inférieure (32) du dispositif photovoltaïque (3), ladite répartition de la luminance solaire réflective étant établie selon plusieurs angles d'élévation ($\Theta$Nk) correspondants à plusieurs orientations du module solaire (1) autour de l'axe de rotation (A);
- détermination d'une orientation optimale ($\Theta$opt) du module solaire (1) compte tenu des mesures de la répartition de la luminance solaire incidente et de la répartition de la luminance solaire réflective,
- mémorisation en mémoire des mesures passées de la répartition de la luminance solaire incidente et de la répartition de la luminance solaire réflective,
- mémorisation en mémoire des orientations optimales passées déterminées pour les mesures passées de la répartition de la luminance solaire incidente et de la répartition de la luminance solaire réflective,
- prévision des évolutions futures de la répartition de la luminance solaire incidente et de la répartition de la luminance solaire réflective, sur la base des mesures passées de la répartition de la luminance solaire incidente et de la répartition de la luminance solaire réflective;
- calcul de l'évolution future de l'orientation optimale en fonction de la prévision des évolutions futures de la répartition de la luminance solaire incidente et de la répartition de la luminance solaire réflective; et
- contrôlement de l'orientation du module solaire (1) sur l'orientation optimale ($\Theta$opt) en fonction des orientations optimales passées et en fonction de l'évolution future de l'orientation optimale.

2. Procédé de pilotage selon la revendication 1, dans lequel la prévision des évolutions futures de la répartition de la luminance solaire incidente et de la répartition de la luminance solaire réflective est basée sur un calcul de prévision météorologique dans une zone de localisation du module solaire (1).

3. Procédé de pilotage selon l'une quelconque des revendications précédentes, dans lequel la détermination de l'orientation optimale ($\Theta$opt) du module solaire (1) est basée au moins en partie sur une recherche, dans la répartition de la luminance solaire incidente et dans la répartition de la luminance solaire réflective, d'un angle d'élévation associé à un maximum d'éclairement solaire sur les deux faces du dispositif photovoltaïque (3).

4. Procédé de pilotage selon l'une quelconque des revendications précédentes, dans lequel la détermination de l'orientation optimale ($\Theta$opt) du module solaire (1) est basée au moins en partie sur une recherche, dans la répartition de la luminance solaire incidente et dans la répartition de la luminance solaire réflective, d'un angle d'élévation associé à un maximum de production énergétique du module solaire (1).

5. Procédé de pilotage selon les revendications 3 ou 4, dans lequel la détermination de l'orientation optimale ($\Theta$opt) du suiveur solaire (2) est basée également sur la prise en compte de l'un au moins des paramètres suivants :

- une consommation d'énergie électrique nécessaire pour modifier l'orientation du module solaire (1);
- un taux d'usure d'organes mécaniques du suiveur solaire (2) sollicités lors d'un changement d'orientation du module solaire (1);
- une vitesse angulaire du suiveur solaire (2) lors d'un changement d'orientation du module solaire (1); ou
- un débattement angulaire du module solaire (1) entre une orientation minimale et une orientation maximale.

6. Procédé de pilotage selon l'une quelconque des revendications précédentes, dans lequel:

- lors de la mesure de la répartition de la luminance solaire incidente, est mise en oeuvre une pondération fréquentielle fonction d'une réponse en fréquence des cellules photovoltaïques de la face supérieure (31) du dispositif photovoltaïque (3); et
- lors de la mesure de la répartition de la luminance solaire réflective, est mise en oeuvre une pondération fréquentielle fonction d'une réponse en fréquence des cellules photovoltaïques de la face inférieure (32) du dispositif photovoltaïque (3).

7. Procédé de pilotage selon l'une quelconque des revendications précédentes, dans lequel, lors détermination d'une orientation optimale ($\Theta$opt) comprend:

- conversion de la mesure de la répartition de la luminance solaire incidente en une cartographie de luminance incidente (CLI) définissant une répartition de valeurs de la luminance (LumS(i, j)) selon des bandes dites supérieures (50S(i)), établies selon une première direction (X) horizontale parallèle à l'axe de rotation (A), et selon des colonnes dites supérieures (51S(j)), établies selon une seconde direction (Y) horizontale orthogonale à la première direction (X), où chaque bande supérieure (50S(i)) est associée à un angle d'élévation ($\Theta$Si) et chaque colonne supérieure (51S(j)) est associée à un angle d'azimut (RSj) ;

- conversion de la mesure de la répartition de la luminance solaire réflective en une cartographie de luminance réflective (CLR) définissant une répartition de valeurs de luminance (LumN(k, m)) selon des bandes dites inférieures (50N(k)), établies selon la première direction (X), et selon des colonnes dites inférieures (51N(m)), établies selon la seconde direction (Y), où chaque bande inférieure (50N(k)) est associée à un angle d'élévation ($\Theta$Nk) et chaque colonne inférieure (51N(m)) est associée à un angle d'azimut (RNm);

- calcul, pour chaque bande supérieure et inférieure (50S(i) ; 50N(k)), d'une valeur de luminance équivalente (LeqS(i) ; LeqN(k)) à partir de l'ensemble des valeurs de luminance (LumS(i, j) ; LumN(k, m)) prises dans la bande (50S(i) ; 50N(k)) considérée;

- calcul, pour plusieurs angles d'élévation théoriques ($\Theta$th) correspondant à plusieurs orientations du module solaire (1), de valeurs de luminance perçue (Lperc($\Theta$th)) par les deux faces (31, 32) du dispositif photovoltaïque (3) à partir des valeurs de luminance équivalentes (LeqS(i), LeqN(k)) calculées pour toutes les bandes (50S(i), 50N(k)) et à partir des écarts angulaires entre les angles d'élévation théoriques ($\Theta$th) et les angles d'élévation ($\Theta$Si, $\Theta$Nk) associées aux bandes; et

- détermination d'un angle d'élévation théorique associé à un maximum de la valeur de luminance perçue et sélection dudit angle d'élévation théorique comme orientation optimale ($\Theta$opt).

8. Procédé de pilotage selon l'une quelconque des revendications 1 à 7, dans lequel les mesures de la répartition de la luminance solaire incidente et de la répartition de la luminance solaire réflective sont réalisées au moyen d'un dispositif de prise d'images qui assure, d'une part, une prise d'images du ciel pour la mesure de la répartition de la luminance solaire incidente et, d'autre part, une prise d'images du sol (SOL) pour établir la mesure de la répartition de la luminance solaire réflective.

9. Procédé de pilotage selon l'une quelconque des revendications 1 à 7, dans lequel les mesures de la répartition de la luminance solaire incidente et de la répartition de la luminance solaire réflective sont réalisées au moyen d'un système de mesure (5) comprenant plusieurs capteurs photosensibles (54, 55), notamment du type capteur pyranométrique, avec, d'une part, un dispositif de mesure supérieur (51) présentant des capteurs photosensibles supérieurs (54) répartis face au ciel pour la mesure de la répartition de la luminance solaire incidente et, d'autre part, un dispositif de mesure inférieur (52) présentant des capteurs photosensibles inférieurs (55) répartis face au sol (SOL) pour la mesure de la répartition de la luminance solaire réflective.

10. Procédé de pilotage selon l'une quelconque des revendications précédentes, dans lequel contrôlement de l'orientation du module solaire (1) est réalisée en fonction de la consommation d'énergie (Cons) nécessaire pour modifier l'orientation du module solaire (1).

11. Procédé de pilotage selon la revendication 10, dans lequel, lors contrôlement de l'orientation du module solaire (1), est établi un scénario potentiel au cours duquel l'orientation ($\Theta$) du module solaire (1) est modifié en partant d'une orientation présente ($\Theta$p) jusqu'à atteindre l'orientation optimale ($\Theta$opt), et à ce scénario potentiel sont associés les calculs de:

- une évolution de l'orientation du module solaire (1) au cours du changement d'orientation en partant de l'orientation présente ($\Theta$p) jusqu'à atteindre l'orientation optimale ($\Theta$opt), cette évolution dépendant de la vitesse de déplacement en rotation du module solaire (1);

- une évolution de la consommation d'énergie (Cons) nécessaire pour modifier l'orientation ($\Theta$) du module solaire (1);

- une évolution de la production d'énergie solaire (Prod) supplémentaire attendue avec un tel changement d'orientation;

- une évolution du rendement énergétique (Rend) attendu basée sur la différence entre la production d'énergie solaire (Prod) et la consommation d'énergie (Cons);

et ensuite l'orientation ($\Theta$) du module solaire (1) est asservie sur ladite orientation optimale ($\Theta$opt) si le rendement énergétique (Rend) est globalement positif pour le scénario, sinon l'orientation ($\Theta$) du suiveur solaire (2) est maintenue à l'orientation présente ($\Theta$p).

12. Module solaire (1) comprenant :

- un suiveur solaire (2) mono-axe orientable autour d'un axe de rotation (A) pour une orientation du module solaire (1) permettant de suivre le soleil (SO) lors de son élévation et de sa descente d'est en ouest, ledit suiveur solaire (2) étant actionnable en rotation selon ledit axe de rotation (A) au moyen d'un système d'actionnement (6) ;
- un dispositif photovoltaïque (3) supporté par ledit suiveur solaire (2) et présentant une face supérieure (31) photo-active faisant face au ciel et munie de cellules photovoltaïques et une face inférieure (32) photo-active faisant face au sol (SOL) et munie de cellules photovoltaïques;

ledit module solaire (1) étant **caractérisé en ce qu'**il comprend en outre:

- un dispositif de mesure supérieur (51) propre à mesurer une répartition de la luminance solaire incidente issue du rayonnement solaire incident (Rdir, Rdif) qui provient du ciel et qui est propre à atteindre la face supérieure (31) du dispositif photovoltaïque (3), ladite répartition de la luminance solaire incidente étant établie selon plusieurs angles d'élévation (ΘSi) correspondants à plusieurs orientations du module solaire (1) autour de l'axe de rotation (A);
- un dispositif de mesure inférieur (52) propre à mesurer une répartition de la luminance solaire réflective issue du rayonnement solaire albédo (Ralb) qui correspond à la réflexion du rayonnement solaire sur le sol (SOL) et qui est propre à atteindre la face inférieure (32) du dispositif photovoltaïque (3), ladite répartition de la luminance solaire réflective étant établie selon plusieurs angles d'élévation (ONk) correspondants à plusieurs orientations du module solaire (1) autour de l'axe de rotation (A); et
- une unité de contrôle (4) en liaison, d'une part, avec les dispositifs de mesure supérieur et inférieur (51, 52) et, d'autre part, avec le système d'actionnement (6) pour piloter la rotation du suiveur solaire (2), où ladite unité de contrôle (4) est conformé pour mettre en oeuvre les étapes du procédé de pilotage conforme à l'une quelconque des revendications précédentes.

**Patentansprüche**

1. Verfahren zum Steuern der Ausrichtung (Θ) eines Solarmoduls (1), unterstützt durch

   - einen einachsigen Solartracker (2), der um eine Drehachse (A) für eine Orientierung des Solarmoduls (1) orientiert werden kann, der das Verfolgen der Sonne (SO) von ihrem Aufgang zu ihrem Untergang von Osten nach Westen zulässt; und
   - das Solarmoduls (1) eine photovoltaische Vorrichtung (3) aufweist und eine dem Himmel zugewandte und mit photovoltaischen Zellen ausgestattete photoaktive Oberseite (31) und eine dem Boden (SOL) zugewandte und mit photovoltaischen Zellen ausgestattete photoaktive Unterseite (32) aufweist;

   wobei das Verfahren aufweist:

   - Messen einer Verteilung der sogenannten einfallenden solaren Leuchtdichte aus einfallender Strahlung, die vom Himmel kommt und die Oberseite (31) der photovoltaischen Vorrichtung (3) erreichen kann, wobei die genannte Verteilung der einfallenden solaren Leuchtdichte gemäß mehreren Elevationswinkeln (ΘSi) entsprechend mehreren Orientierungen des Solarmoduls (1) um die Drehachse (A) bestimmt wird;
   - Messen einer Verteilung der sogenannten reflektierenden solaren Leuchtdichte aus Albedo genannter Sonnenstrahlung (Ralb), die der Reflexion der Sonnenstrahlung am Boden (SOL) entspricht und die Unterseite (32) der photovoltaischen Vorrichtung (3) erreichen kann, wobei die genannte Verteilung der reflektierenden solaren Leuchtdichte gemäß mehreren Elevationswinkeln (ΘNk) entsprechend mehreren Orientierungen des Solarmoduls (1) um die Drehachse (A) bestimmt wird;
   - Ermitteln einer optimalen Orientierung (Θopt) des Solarmoduls unter Berücksichtigung der Messwerte der Verteilung der einfallenden solaren Leuchtdichte und der Verteilung der reflektierenden solaren Leuchtdichte;
   - Speichern früherer Messwerte der Verteilung der einfallenen solaren Leuchtdichte und der Verteilung der reflektierenden solaren Leuchtdichte in einem Speicher;
   - Speichern früherer optimaler Orientierungen, ermittelt für die früheren Messwerte der Verteilung der einfallenden solaren Leuchtdichte und der Verteilung der reflektierenden solaren Leuchtdichte, in einem Speicher;
   - Vorhersagen zukünftiger Evolutionen der Verteilung der einfallenden solaren Leuchtdichte und der Verteilung der reflektierenden solaren Leuchtdichte auf der Basis früherer Messwerte der Verteilung der einfallenden solaren Leuchtdichte und der Verteilung der reflektierenden solaren Leuchtdichte;
   - Berechnen der zukünftigen Evolution der optimalen Orientierung in Abhängigkeit von der Vorhersage der zukünftigen Evolutionen der Verteilung der einfallenden solaren Leuchtdichte und der Verteilung der reflektierenden solaren Leuchtdichte; und

- Steuern der Orientierung des Solarmoduls (1) auf die optimale Orientierung (Θopt) in Abhängigkeit von früheren optimalen Orientierungen und in Abhängigkeit von der zukünftigen Evolution der optimalen Orientierung.

2. Verfahren zum Steuern nach Anspruch 1, wobei bei dem die Vorhersage zukünftiger Evolutionen der Verteilung der einfallenden solaren Leuchtdichte und der Verteilung der reflektierenden solaren Leuchtdichte auf einer Berechnung der meteorologischen Vorhersage in einer Lokalisierungszone des Solarmoduls (1) basiert.

3. Verfahren zum Steuern nach einem der vorherigen Ansprüche, wobei das Bestimmen der optimalen Orientierung (Θopt) des Solarmoduls (1) wenigstens teilweise auf einer Suche, in der Verteilung der einfallenden solaren Leuchtdichte und in der Verteilung der reflektierenden solaren Leuchtdichte, eines Elevationswinkels basiert, der mit einer maximalen Solarbeleuchtung auf den beiden Seiten der photovoltaischen Vorrichtung (3) assoziiert ist.

4. Verfahren zum Steuern nach einem der vorherigen Ansprüche, wobei das Bestimmen der optimalen Orientierung (Θopt) des Solarmoduls (1) wenigstens teilweise auf einer Suche, in der Verteilung der einfallenden solaren Leuchtdichte und in der Verteilung der reflektierenden solaren Leuchtdichte, eines Elevationswinkels basiert, der mit einem Maximum der Energieproduktion des Solarmoduls (1) assoziiert ist.

5. Verfahren zum Steuern nach einem der Ansprüche 3 oder 4, wobei das Bestimmen der optimalen Orientierung (Θopt) des Solartrackers (2) auch auf der Berücksichtigung von wenigstens einem der folgenden Parameter basiert:

- einem elektrischen Energieverbrauch, der zum Ändern der Orientierung des Solarmoduls (1) notwendig ist;
- einer Abnutzungsrate der mechanischen Teile des Solartrackers (2), der bei einer Änderung der Orientierung des Solarmoduls (1) hervorgerufen wird;
- einer Winkelgeschwindigkeit des Solartrackers (2) bei einer Änderung der Orientierung des Solarmoduls (1); oder
- einer Winkelablenkung des Solarmoduls (1) zwischen einer minimalen Orientierung und einer maximalen Orientierung.

6. Verfahren zum Steuern nach einem der vorherigen Ansprüche, wobei:

- beim Messen der Verteilung der einfallenden solaren Leuchtdichte eine Frequenzgewichtung verwendet wird, die eine Funktion des Frequenzgangs der photovoltaischen Zellen der Oberseite (31) der photovoltaischen Vorrichtung (3) ist; und
- beim Messen der Verteilung der reflektierenden solaren Leuchtdichte eine Frequenzgewichtung verwendet wird, die eine Funktion des Frequenzgangs der photovoltaischen Zellen der Unterseite (32) der photovoltaischen Vorrichtung (3) ist.

7. Verfahren zum Steuern nach einem der vorherigen Ansprüche, wobei das Ermitteln einer optimalen Orientierung (Θopt) aufweist:

- Umwandeln des Messwertes der Verteilung der einfallenden solaren Leuchtdichte in eine Einfallende-Leuchtdichte-Kartografie (CLI), die eine Verteilung von Werten der Leuchtdichte (LumS(i, j)) gemäß sogenannten oberen Bändern (50S(i)) definiert, bestimmt in einer ersten horizontalen Richtung (X) parallel zur Drehachse (A) und in sogenannten oberen Spalten (51 S(j)), bestimmt in einer zweiten horizontalen Richtung (Y) orthogonal zur ersten Richtung (X), wobei jedes obere Band (50S(i)) mit einem Elevationswinkel (ΘSi) assoziiert ist und jede obere Spalte (51 S(j)) mit einem Azimutwinkel (RSj) assoziiert ist;
- Umwandeln des Messwertes der Verteilung der reflektierenden solaren Leuchtdichte in eine Reflektierende-Leuchtdichte-Kartografie (CLR), die eine Verteilung von Leuchtdichtewerten (LumN(k, m)) gemäß den sogenannten unteren Bändern (50N(k)) definieren, bestimmt in der ersten Richtung (X), und gemäß sogenannten unteren Spalten (51 N(m)), bestimmt in der zweiten Richtung (Y), wobei jedes untere Band (50N(k)) mit einem Elevationswinkel (ΘNk) assoziiert ist und jede untere Spalte (51 N(m)) mit einem Azimutwinkel (RNm) assoziiert ist;
- Berechnen, für jedes obere und untere Band (50S(i); 50N(k)), eines äquivalenten Leuchtdichtewertes (LeqS(i); LeqN(k)) auf der Basis aller in dem betrachteten Band (50S(i); 50N(k)) ermittelten Leuchtdichtewerte (LumS(i, j); LumN(k, m));
- Berechnen, für mehrere theoretische Elevationswinkel (Θth) entsprechend mehreren Orientierungen des Solarmoduls (1), von von den beiden Seiten (31, 32) der photovoltaischen Vorrichtung (3) wahrgenommenen Leuchtdichtewerten (Lperc(Θth)) auf der Basis der äquivalenten Leuchtdichtewerte (LeqS(i), LeqN(k)), berechnet für alle Bänder (50S(i), 50N(k)) und auf der Basis der Winkelabweichungen zwischen den theoretischen Elevationswinkeln (Θth) und den mit den Bändern assoziierten Elevationswinkeln (ΘSi, ΘNk);
- Ermitteln eines theoretischen Elevationswinkels, der mit einem Maximum des wahrgenommenen Leuchtdichtewertes assoziiert ist, und Auswählen des theoretischen Elevationswinkels als optimale Orientierung (Θopt).

8. Verfahren zum Steuern nach einem der vorherigen Ansprüche 1 bis 7, wobei die Messungen der Verteilung der einfallenden solaren Leuchtdichte und der Verteilung der reflektierenden solaren Leuchtdichte mittels einer Bildaufnahmevorrichtung erfolgen, die einerseits die Aufnahme eines Bildes des Himmels zum Messen der Verteilung der einfallenden solaren Leuchtdichte und andererseits eine Aufnahme von Bildern des Bodens (SOL) gewährleistet, um den Messwert der Verteilung der reflektierenden solaren Leuchtdichte zu bestimmen.

9. Verfahren zum Steuern nach einem der vorherigen Ansprüche 1 bis 7, wobei die Messungen der Verteilung der einfallenden solaren Leuchtdichte und der Verteilung der reflektierenden solaren Leuchtdichte mittels eines Messsystems (5) erfolgen, das Folgendes umfasst: mehrere photosensible Sensoren (54, 55), insbesondere des pyranometrischen Sensortyps, einerseits mit einer oberen Messvorrichtung (51), die dem Himmel zugewandt verteilte obere photosensible Sensoren (54) zum Messen der Verteilung der einfallenden solaren Leuchtdichte aufweist, und andererseits mit einer unteren Messvorrichtung (52), die dem Boden (SOL) zugewandt verteilte untere photosensible Sensoren (55) zum Messen der Verteilung der reflektierenden solaren Leuchtdichte aufweist.

10. Verfahren zum Steuern nach einem der vorherigen Ansprüche 1 bis 7, wobei das Steuern der Orientierung des Solarmoduls (1) in Abhängigkeit von dem zum Ändern der Orientierung des Solarmoduls (1) notwendigen Energieverbrauchs (Cons) realisiert wird.

11. Verfahren zum Steuern nach Anspruch 10, wobei während des Steuern der Orientierung des Solarmoduls (1) ein potentielles Szenario bestimmt wird, in dessen Verlauf die Orientierung (Θ) des Solarmoduls (1) von einer aktuellen Orientierung (Θp) auf die optimale Orientierung (Θopt) geändert wird, wobei mit diesem potentiellen Szenario die folgenden Berechnungen assoziiert sind:

- eine Evolution der Verteilung des Solarmoduls (1) im Laufe der Orientierungsänderung von der aktuellen Orientierung (Θp) bis zum Erreichen der optimalen Orientierung (Θopt), wobei diese Evolution von der Drehbewegungsgeschwindigkeit des Solarmoduls (1) abhängig ist;
- eine Evolution des zum Ändern der Orientierung (Θ) des Solarmoduls (1) notwendigen Energieverbrauchs (Cons);
- eine Evolution der mit einer solchen Orientierungsänderung erwarteten zusätzlichen Solarenergieproduktion (Prod);
- eine Evolution des erwarteten Energieertrags (Rend) auf der Basis der Differenz zwischen der Solarenergieproduktion (Prod) und dem Energieverbrauch (Cons);

und dann die Orientierung (Θ) des Solarmoduls (1) auf die genannte optimale Orientierung (Θopt) reguliert wird, wenn der Energieertrag (Rend) für das Szenario global positiv ist, andernfalls die Orientierung (Θ) des Solartrackers (2) auf der aktuellen Orientierung (Θp) gehalten wird.

12. Solarmodul (1), aufweisend:

- einen einachsigen Solartracker (2), der um eine Drehachse (A) für eine Orientierung des Solarmoduls (1) orientiert werden kann und der die Sonne (SO) bei ihrem Aufgehen und ihrem Untergehen von Osten nach Westen verfolgen kann, wobei der Solartracker (2) gemäß der genannten Drehachse (A) mittels eines Betätigungssystems (6) in Drehung versetzt werden kann;
- eine photovoltaische Vorrichtung (3), die vom Solartracker (2) getragen wird und eine dem Himmel zugewandte und mit photovoltaischen Zellen ausgestattete photoaktive Oberseite (31) und eine dem Boden (SOL) zugewandte und mit photovoltaischen Zellen ausgestattete photoaktive Unterseite (32) aufweist;

wobei das genannte Solarmodul (1) **dadurch gekennzeichnet ist, dass** es ferner umfasst:

- eine obere Messvorrichtung (51) zum Messen einer Verteilung der einfallenden solaren Leuchtdichte aus der einfallenden Sonnenstrahlung (Rdir, Rdif), die vom Himmel kommt und die Oberseite (31) der photovoltaischen Vorrichtung (3) erreichen kann, wobei die genannte Verteilung der einfallenden solaren Leuchtdichte gemäß mehreren Elevationswinkeln (ΘSi) entsprechend mehreren Orientierungen des Solarmoduls (1) um die Drehachse (A) bestimmt wird;
- eine untere Messvorrichtung (52) zum Messen einer Verteilung der reflektierenden solaren Leuchtdichte aus der solaren Albedo-Strahlung (Ralb), die der Reflexion der Sonnenstrahlung am Boden (SOL) entspricht und die Unterseite (32) der photovoltaischen Vorrichtung (3) erreichen kann, wobei die genannte Verteilung der reflektierenden solaren Leuchtdichte gemäß mehreren Elevationswinkeln (ΘNk) entsprechend mehreren Orientierungen des Solarmoduls (1) um die Drehachse (A) bestimmt wird; und
- eine Steuereinheit (4) einerseits in Verbindung mit der oberen und unteren Messvorrichtung (51, 52) und andererseits mit dem Betätigungssystem (6) zum Steuern der Rotation des Solartrackers (2), wobei die genannte Steuereinheit (4) so ausgelegt ist, dass sie die Schritte des Verfahrens zum Steuern nach einem der vorherigen Ansprüche durchführt.

**Claims**

1. Method for controlling the orientation (Θ) of a solar module (1), supported by

   - a single-axis solar tracker (2) orientable about an axis of rotation (A) for orientation of the solar module (1) allowing following the Sun (SO) during its rise and its descent from east to west; and
   - the solar module (1) including a photovoltaic device (3) and having an photoactive upper face (31) facing the sky and provided with photovoltaic cells and a photoactive lower face (32) facing the ground (SOL) and provided with photovoltaic cells;

   the method comprising:

   - measuring a distribution of the so-called incident solar luminance originating from incident radiation which is capable of reaching the upper face (31) of the photovoltaic device (3), said distribution of the incident solar luminance being established according to several elevation angles (ΘSi) corresponding to several orientations of the solar module (1) about the axis of rotation (A);
   - measuring a distribution of the so-called reflected solar luminance originating from the so-called albedo solar radiation (Ralb) which corresponds to the reflection of the solar radiation on the ground (SOL) and which is capable of reaching the lower face (32) of the photovoltaic device (3), said distribution of the of the reflected solar luminance being established according to several elevation angles (ΘNk) corresponding to several orientations of the solar module (1) about the axis of rotation (A);
   - determining an optimum orientation (Θopt) of the solar module (1) considering the measurements of the distribution of the incident solar luminance and of the distribution of the reflected solar luminance;
   - storing the past measurements of the distribution of the incident solar luminance and of the distribution of the reflected solar luminance in memory;
   - storing the past optimum orientations determined for the past measurements of the distribution of the incident solar luminance and of the distribution of the reflected solar luminance in memory;
   - forecasting the future evolutions of the distribution of the incident solar luminance and of the distribution of the reflected solar luminance, on the basis of the past measurements of the distribution of the incident solar luminance and of the distribution of the reflected solar luminance;
   - calculating the future evolution of the optimum orientation according to the forecast of the future evolutions of the distribution of the incident solar luminance and of the distribution of the reflected solar luminance; and
   - controlling the orientation of the solar module (1) on the optimum orientation (Θopt) according to the past optimum orientations and according to the future evolution of the optimum orientation.

2. Method for controlling according to claim 1, wherein the forecast of the future evolutions of the distribution of the incident solar luminance and of the distribution of the reflected solar luminance is based on a weather forecast calculation in a location area of the solar module (1).

3. Method for controlling according to one of the preceding claims, wherein the determination of the optimum orientation (Θopt) of the solar module (1) is based at least partially on a research, in the distribution of the incident solar luminance and in the distribution of the reflected solar luminance, of an elevation angle associated to a maximum solar illuminance on the two faces of the two faces of the photovoltaic device (3).

4. Method for controlling according to one of the preceding claims, wherein the determination of the optimum orientation (Θopt) of the solar module (1) is based at least partially on a research, in the distribution of the incident solar luminance and in the distribution of the reflected solar luminance, of an elevation angle associated to a maximum energy production of the solar module (1).

**5.** Method for controlling according to claim 3 or 4, wherein the determination of the optimum orientation (Θopt) of the solar tracker (2) is also based on the consideration of at least one of the following parameters:

- an electrical energy consumption necessary to modify the orientation of the solar module (1);
- a wear rate of mechanical members of the solar tracker (2) loaded during a change of the orientation of the solar module (1);
- an angular speed of the solar tracker (2) during a change of the orientation of the solar module (1); or
- an angular displacement of the solar tracker (1) between a minimum orientation and a maximum orientation.

**6.** Method for controlling according to one of the preceding claims, wherein:

- when measuring the distribution of the incident solar luminance, is implemented a frequency weighting dependent of a frequency response of the photovoltaic cells of the upper face (31) of the photovoltaic device (3); and
- when measuring the distribution of the reflected solar luminance, is implemented a frequency weighting dependent of a frequency response of the photovoltaic cells of the lower face (32) of the photovoltaic device (3).

**7.** Method for controlling according to one of the preceding claims, wherein determining an optimum orientation (Θopt) includes:

- converting the measurement of the distribution of the incident solar luminance into an incident luminance mapping (CLI) defining a distribution of luminance values (LumS(i,j)) according to strips called upper strips (50S(i)), established according to a horizontal first direction (X) parallel to the axis of rotation (A), and according to columns called upper columns (51S(j)), established according to a horizontal second direction (Y) orthogonal to the first direction (X), where each upper strip (50S(i)) is associated to an elevation angle (OSi) and each upper column (51S(j)) is associated to an azimuth angle (RSj);
- converting the measurement of the distribution of the reflected solar luminance into a reflected luminance mapping (CLR) defining a distribution of luminance values (LumN(k,m)) according to strips called lower strips (50N(k)), established according to the first direction (X), and according to columns called lower columns (51N(m)), established according to the second direction (Y), where each lower strip (50N(k)) is associated to an elevation angle (ONk) and each lower column (51N(m)) is associated to an azimuth angle (RNm);
- calculating, for each upper and lower strip (50S(i); 50N(k)), of an equivalent luminance value (LeqS(i); LeqN(k)) from the set of luminance values (LumS(i,j); LumN(k,m)) taken in the considered strip (50S(i); 50N(k));
- calculating, for several theoretical elevation angles (Θth) corresponding to several orientations of the solar module (1), of luminance values (Lperc(Θth)) perceived by the two faces (31, 32) of the photovoltaic device (3) from the equivalent luminance values (LeqS(i), LeqN(k)) calculated for all the strips (50S(i), 50N(k)) and from the angular differences between the theoretical elevation angles (Θth) and the elevation angles (ΘSi, ONk) associated to the strips; and
- determining a theoretical elevation angle associated to a maximum of the perceived luminance value and selection of said theoretical elevation angle as the optimum orientation (Θopt).

**8.** Method for controlling according to one of the preceding claims 1 to 7, wherein the measurements of the distribution of the incident solar luminance and of the distribution of the reflected solar luminance are carried out by means of an image capturing device which ensures, on the one hand, a capture of images of the sky for measuring the distribution of the incident solar luminance and, on the other hand, a capture of images of the ground (SOL) for establishing the measurement of the distribution of the reflected solar luminance.

**9.** Method for controlling according to one of the preceding claims 1 to 7, wherein the measurements of the distribution of the incident solar luminance and of the distribution of the reflected solar luminance are carried out by means of a measuring system (5) comprising several photosensitive sensors (54, 55), in particular pyranometric-type sensors, with, on the one hand, an upper measuring device (51) having upper photosensitive sensors (54) distributed facing the sky for measuring the distribution of the incident solar luminance and, on the other hand, a lower measuring device (52) having lower photosensitive sensors (55) distributed facing the ground (SOL) for measuring the distribution of the reflected solar luminance.

**10.** Method for controlling according to one of the preceding claims, wherein controlling the orientation of the solar module (1) is carried out according to the energy consumption (Cons) necessary to modify the orientation of the solar module (1).

**11.** Method for controlling according to claim 10, wherein controlling the orientation of the solar module (1), is established a potential scenario during which the orientation ($\Theta$) of the solar module (1) is modified starting from a current orientation ($\Theta$p) until reaching the optimum orientation ($\Theta$opt), and to this potential scenario are associated the calculations of:

- an evolution of the orientation of the solar module (1) during the orientation change starting from the current orientation ($\Theta$p) until reaching the optimum orientation ($\Theta$opt), this evolution depending on the rotational displacement speed of the solar module (1);
- an evolution of the energy consumption (Cons) necessary to modify the orientation ($\Theta$) of the solar module (1);
- an evolution of the supplemental solar energy production (Prod) expected with such an orientation change;
- an evolution of the expected energy yield (Rend) based on the difference between the solar energy production (Prod) and the energy consumption (Cons);

and afterwards, the orientation ($\Theta$) of the solar module (1) is servo-controlled on said optimum orientation ($\Theta$opt) if the energy yield (Rend) is globally positive for the scenario, otherwise the orientation ($\Theta$) of the solar tracker (2) is maintained at the current orientation ($\Theta$p).

**12.** Solar module (1) comprising:

- a single-axis solar tracker (2) orientable about an axis of rotation (A) for an orientation of the solar module (1) allowing tracking the Sun (SO) during its rise and its descent from east to west, said solar tracker (2) being actuatable in rotation about said axis of rotation (A) by means of an actuation system (6);
- a photovoltaic device (3) supported by said solar tracker (2) and having a photoactive upper face (31) facing the sky and provided with photovoltaic cells and a photoactive lower face (32) facing the ground (SOL) and provided with photovoltaic cells;

said solar module (1) **being characterized in that** it further comprises:

- an upper measuring device (51) capable of measuring a distribution of the incident solar luminance originating from the incident solar radiation (Rdir, Rdif) which comes from the sky and which is capable of reaching the upper face (31) of the photovoltaic device (3), said distribution of the incident solar luminance being established according to several elevation angles ($\Theta$Si) corresponding to several orientations of the solar module (1) about the axis of rotation (A);
- a lower measuring device (52) capable of measuring a distribution of the reflected solar luminance originating from the albedo solar radiation (Ralb) which corresponds to the reflection of the solar radiation on the ground (SOL) and which is capable of reaching the lower face (32) of the photovoltaic device (3), said distribution of the reflected solar luminance being established according to several elevation angles ($\Theta$Nk) corresponding to several orientations of the solar module (1) about the axis of rotation (A); and
- a control unit (4) connected, on the one hand, to the upper and lower measuring devices (51, 52) and, on the other hand, to the actuation system (6) for controlling the rotation of the solar tracker (2), where said control unit (4) is configured to implement the steps of the controlling method in accordance with any one of the preceding claims.

**Fig. 1**

**Fig. 2**

Fig. 3a

Fig. 3b

Fig. 4

| | 50S(1) | 50S(2) | 50S(3) | 50S(4) | 50S(5) |
|---|---|---|---|---|---|
| 51S(1) | 5 | 10 | 10 | 10 | 0 |
| 51S(2) | 10 | 10 | 10 | 10 | 10 |
| 51S(3) | 10 | 50 | 50 | 40 | 10 |
| 51S(4) | 10 | 50 | 90 | 50 | 10 |
| 51S(5) | 10 | 80 | 90 | 80 | 10 |
| 51S(6) | 10 | 50 | 90 | 50 | 10 |
| 51S(7) | 10 | 20 | 50 | 20 | 0 |

CLi

| 50S(1) | 50S(2) | 50S(3) | 50S(4) | 50S(5) |
|---|---|---|---|---|
| 10 | 30 | 60 | 30 | 10 |

MLeqS

| | 50N(1) | 50N(2) | 50N(3) | 50N(4) | 50N(5) |
|---|---|---|---|---|---|
| 51N(1) | 5 | 10 | 10 | 10 | 0 |
| 51N(2) | 10 | 10 | 10 | 5 | 0 |
| 51N(3) | 10 | 10 | 10 | 10 | 5 |
| 51N(4) | 10 | 20 | 10 | 10 | 10 |
| 51N(5) | 10 | 40 | 30 | 10 | 10 |
| 51N(6) | 20 | 60 | 50 | 10 | 10 |
| 51N(7) | 10 | 30 | 30 | 10 | 5 |

CLR

| 50N(1) | 50N(2) | 50N(3) | 50N(4) | 50N(5) |
|---|---|---|---|---|
| 15 | 30 | 20 | 9 | 5 |

MLeqN

Fig. 5

Fig. 6

CLi

| 5 | 10 | 10 | 10 | 0 |
| 10 | 10 | 10 | 10 | 10 |
| 10 | 50 | 50 | 40 | 10 |
| 10 | 50 | 90 | 50 | 10 |
| 10 | 80 | 90 | 80 | 10 |
| 10 | 50 | 90 | 50 | 10 |
| 10 | 20 | 50 | 20 | 0 |

CLiP

| 0 | 10 | 10 | 10 | 0 |
| 0 | 10 | 20 | 50 | 20 |
| 0 | 10 | 50 | 90 | 50 |
| 0 | 10 | 90 | 90 | 80 |
| 0 | 10 | 50 | 80 | 50 |
| 0 | 10 | 30 | 50 | 20 |
| 0 | 10 | 10 | 10 | 0 |

CLiP

| 0 | 10 | 10 | 10 | 50 |
| 0 | 10 | 10 | 50 | 80 |
| 0 | 10 | 10 | 80 | 90 |
| 0 | 10 | 10 | 50 | 90 |
| 0 | 10 | 10 | 20 | 50 |
| 0 | 0 | 10 | 10 | 10 |
| 0 | 0 | 0 | 0 | 0 |

CLR

| 0 | 0 | 0 | 0 | 0 |
| 10 | 10 | 10 | 10 | 0 |
| 10 | 10 | 20 | 20 | 10 |
| 20 | 20 | 30 | 30 | 20 |
| 10 | 30 | 40 | 20 | 10 |
| 0 | 20 | 30 | 10 | 0 |
| 0 | 10 | 20 | 0 | 0 |

CLRP

| 0 | 0 | 0 | 0 | 0 |
| 0 | 10 | 10 | 0 | 0 |
| 0 | 10 | 10 | 10 | 0 |
| 0 | 10 | 20 | 10 | 0 |
| 0 | 10 | 30 | 10 | 10 |
| 0 | 10 | 40 | 20 | 10 |
| 0 | 10 | 30 | 20 | 10 |

CLRP

| 0 | 10 | 20 | 20 | 10 |
| 0 | 10 | 20 | 20 | 10 |
| 0 | 10 | 30 | 30 | 10 |
| 0 | 10 | 20 | 20 | 10 |
| 0 | 10 | 20 | 20 | 10 |
| 0 | 10 | 10 | 10 | 10 |
| 0 | 0 | 10 | 10 | 0 |

$t$

$\Theta\ opt\ (t)$

$t+1$

$\Theta\ opt\ (t+1)$

$t+n$

$\Theta\ opt\ (t+n)$

*Fig. 7*

4

5

40

41

42

43

44

45

46

47

6

*Fig. 8*

Fig. 9

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011083718 A1